# EUROPEAN PATENT APPLICATION

(11) **EP 4 807 536 A1**
(43) Date of publication of application: **16.09.2026**
(21) Application number: 26162023.1
(22) Date of filing: 03.03.2026
(51) Int. Cl.: G06F 8/51, G06F 8/73, G06F 8/75, G06F 8/76, G06F 11/3668, G06N 20/00

(54) **AI-BASED CONVERSION OF A LEGACY APPLICATION INTO A CONVERTED APPLICATION USING A SCHEMA**

(30) Priority: 12.03.2025 US 202519078041
(71) Applicant: Microsoft Technology Licensing, LLC, Redmond, WA 98052 (US)
(72) Inventor: BAHREE, Amit, Redmond, 98052-6399 (US); KUMANDURI, Muralidhar, Redmond, 98052-6399 (US); CHEN, Wenting, Redmond, 98052-6399 (US); SHARMA, Ravi, Redmond, 98052-6399 (US); JAVED, Muhammad Uneeb, Redmond, 98052-6399 (US); ZUBERI, Khawar Mahmood, Redmond, 98052-6399 (US); LEE, Mina, Redmond, 98052-6399 (US); SJOQUIST, Nathan, Redmond, 98052-6399 (US); YIN, Huizi, Redmond, 98052-6399 (US); JANI, Meghna Dhiren, Redmond, 98052-6399 (US); WANAS, Nayer, Redmond, 98052-6399 (US)
(74) Representative: CMS Cameron McKenna Nabarro Olswang LLP

(57) **Abstract**

Techniques are described herein that are capable of causing an AI system to convert a legacy application into a converted application using a schema. An AI system is caused to generate a schema that defines functional blocks of a legacy application and logical relationships therebetween based on documentation describing the functional blocks and the logical relationships. The AI system is caused to perform a conversion of the legacy application into a converted application based on the schema and the legacy application. Performing the conversion includes converting the functional blocks, which are configured to have respective functionalities and are written in a first programming language, into code blocks, which are configured to have the respective functionalities and are written in a second programming language. Performing the conversion further includes configuring the code blocks to have the logical relationships. The converted application is defined by the code blocks and the logical relationships.

## Description

### BACKGROUND

Legacy applications often are updated to conform to modem standards and performance expectations. For example, a legacy application that is written in an old programming language may be rewritten in a newer programming language. In another example, portions of a legacy application may be streamlined to increase efficiency with which the legacy application executes. However, some entities (e.g., organizations, such as banks and manufacturers) continue to use legacy applications to perform at least some of their functions because updating the legacy applications may be quite complex or costly. For instance, the legacy applications often have a substantial amount of customization, limited or no documentation of their features, and relatively few developers who are sufficiently skilled in the programming language(s) in which the legacy applications are written.

### SUMMARY

It may be desirable to cause (e.g., trigger) an artificial intelligence (AI) system, which includes one or more AI models, to convert a legacy application into a converted application using a schema. A schema defines blocks (e.g., slices or portions) of an application and logical relationships between the blocks. The blocks of the application are configured to provide respective functionalities. For instance, a first block is configured to provide a first functionality; a second block is configured to provide a second functionality, and so on. By providing the legacy application and the schema as inputs to the AI system, the AI system is caused to convert functional blocks of the legacy application into code blocks of the converted application. The AI system is caused to configure the code blocks to have the logical relationships that are defined by the schema. The functional blocks of the legacy application are written in a first programming language. The code blocks of the converted application are written in a second programming language that is different from the first programming language. Causing the AI system to convert the legacy application into the converted application using the schema reduces complexity and/or cost associated with the conversion. Providing the legacy application and the schema to the AI system enables the AI system to characterize and convert customizations that are included in the legacy application into corresponding code blocks of the converted application, generate documentation regarding the legacy application and/or the converted application, and utilize such documentation to facilitate (e.g., inform) the conversion of the legacy application into the converted application.

Various approaches are described herein for, among other things, causing an AI system to convert a legacy application into a converted application using a schema. An AI system is triggered to generate a schema that defines functional blocks of a legacy application and logical relationships between the functional blocks. The AI system is triggered to generate the schema by providing the legacy application and documentation, which describes the functional blocks and the logical relationships, as first inputs to the AI system. The AI system is triggered to perform a conversion of the legacy application into a converted application by providing the schema and the legacy application as second inputs to the AI system. Triggering the AI system to perform the conversion comprises causing the AI system to convert the functional blocks into code blocks by using the schema to identify the functional blocks. The functional blocks are configured to have respective functionalities and are written in a first programming language. The code blocks are configured to have the respective functionalities and are written in a second programming language that is different from the first programming language. Triggering the AI system to perform the conversion further comprises causing the AI system to configure the code blocks to have the logical relationships by using the schema to identify the logical relationships. The converted application is defined by the code blocks and the logical relationships.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example AI-based schema-dependent conversion system in accordance with an embodiment.
FIGS. 2-4 depict flowcharts of example methods for causing an AI system to convert a legacy application into a converted application using a schema in accordance with embodiments.
FIG. 5 is a block diagram of an example computing system in accordance with an embodiment.
FIG. 6 is a system diagram of an example mobile device in accordance with an embodiment.
FIG. 7 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Example Embodiments

It may be desirable to cause (e.g., trigger) an artificial intelligence (AI) system, which includes one or more AI models, to convert a legacy application into a converted application using a schema. A schema defines blocks (e.g., slices or portions) of an application and logical relationships between the blocks. The blocks of the application are configured to provide respective functionalities. For instance, a first block is configured to provide a first functionality; a second block is configured to provide a second functionality, and so on. By providing the legacy application and the schema as inputs to the AI system, the AI system is caused to convert functional blocks of the legacy application into code blocks of the converted application. The AI system is caused to configure the code blocks to have the logical relationships that are defined by the schema. The functional blocks of the legacy application are written in a first programming language. The code blocks of the converted application are written in a second programming language that is different from the first programming language. Causing the AI system to convert the legacy application into the converted application using the schema reduces complexity and/or cost associated with the conversion. Providing the legacy application and the schema to the AI system enables the AI system to characterize and convert customizations that are included in the legacy application into corresponding code blocks of the converted application, generate documentation regarding the legacy application and/or the converted application, and utilize such documentation to facilitate (e.g., inform) the conversion of the legacy application into the converted application.

Example embodiments described herein are capable of causing an AI system to convert a legacy application into a converted application using a schema. Example techniques described herein have a variety of benefits as compared to conventional techniques for converting a legacy application written in a first programming language into a converted application written in a second programming language. For instance, the example techniques are capable of causing the legacy application to be converted into the converted application faster (e.g., 30-50% faster), more efficiently, more reliably, at a lower cost, and/or in a more scalable manner than conventional techniques. The example techniques are capable of causing tests (e.g., functional tests and/or integration tests), which are configured to test the legacy application and/or the converted application, to be generated faster, more efficiently, more reliably, at a lower cost, and/or in a more scalable manner than the conventional techniques. The example techniques are capable of causing the testing of the legacy application and/or the converted application to be performed faster, more efficiently, more reliably, at a lower cost, and/or in a more scalable manner than the conventional techniques by using the aforementioned tests.

The example techniques are capable of enabling an information technology (IT) professional (e.g., an administrator or a developer) to intervene in the conversion process and help improve each step before proceeding to subsequent step(s). For instance, at any one or more of the steps of the conversion process, the IT professional may modify documentation that is used to generate the schema (e.g., by adding, deleting, or replacing information in the documentation), modify the schema, modify code in the converted application, add code to the converted application, and/or delete code from the converted application. The IT professional may modify tests (e.g., functional tests and/or integration tests) that are used to test the legacy application and/or the converted application.

The example techniques may reduce an amount of time and/or resources (e.g., processor cycles, memory, network bandwidth) that is consumed to convert a legacy application written in a first programming language into a converted application written in a second programming language. For instance, by causing an AI system to generate a schema, which defines functional blocks of the legacy application and logical relationships between the functional blocks, (e.g., by providing the legacy application and documentation describing the functional blocks and the logical relationships as inputs to the AI system), causing the AI system to perform a conversion of the legacy application into a converted application (e.g., by providing the schema and the legacy application as inputs to the AI system), causing the AI system to convert the functional blocks, which are configured to have respective functionalities, into code blocks, which are configured to have the respective functionalities (e.g., by using the schema to identify the functional blocks), causing the AI system to configure the code blocks to have the logical relationships (e.g., by using the schema to identify the logical relationships), causing the AI system to generate the documentation (e.g., by providing the legacy application and a description of the legacy application as inputs to the AI system), causing the AI system to identify the functional blocks of the legacy application by clustering respective subsets of files that define the legacy application into the functional blocks, and/or causing the AI system to iteratively perform a modification operation that comprises increasing an extent to which a first functionality of the legacy application corresponds to a second functionality of the converted application (e.g., by alternately modifying the schema using the code blocks and modifying the code blocks using the schema), the example techniques may reduce the amount of time and/or resources that is consumed by a computing system to convert the legacy application into the converted application. In an aspect, the example techniques reduce the amount of time that is consumed to convert the legacy application into the converted application from multiple years to less than one year (e.g., less than six months, less than four months, less than three months, or less than two months).

The example techniques may automate conversion of the legacy application into the converted application or any one or more operations that are used to perform the conversion (e.g., generating the schema, converting the functional blocks of the legacy application into the code blocks of the converted application, and/or configuring the code blocks to have the logical relationships).

By reducing the amount of time and/or resources that is consumed by a computing system to convert the legacy application into the converted application, the efficiency of the computing system may be increased. For instance, the example techniques may increase the efficiency of a computing system that converts a legacy application into a converted application by causing an AI system to generate a schema, which defines functional blocks of the legacy application and logical relationships between the functional blocks, (e.g., by providing the legacy application and documentation describing the functional blocks and the logical relationships as inputs to the AI system), causing the AI system to perform a conversion of the legacy application into the converted application (e.g., by providing the schema and the legacy application as inputs to the AI system), causing the AI system to convert the functional blocks, which are configured to have respective functionalities, into code blocks, which are configured to have the respective functionalities (e.g., by using the schema to identify the functional blocks), causing the AI system to configure the code blocks to have the logical relationships (e.g., by using the schema to identify the logical relationships), causing the AI system to generate the documentation (e.g., by providing the legacy application and a description of the legacy application as inputs to the AI system), causing the AI system to identify the functional blocks of the legacy application by clustering respective subsets of files that define the legacy application into the functional blocks, and/or causing the AI system to iteratively perform a modification operation that comprises increasing an extent to which a first functionality of the legacy application corresponds to a second functionality of the converted application (e.g., by alternately modifying the schema using the code blocks and modifying the code blocks using the schema).

By reducing the amount of time that is consumed to convert the legacy application into the converted application, the example techniques may increase a user experience and/or efficiency of an information technology (IT) professional (e.g., an administrator) who manages configuration, operation, and/or maintenance of the legacy application or a system (e.g., a networked system, such as an enterprise) on which the legacy application runs. The example techniques may reduce a number of tasks that are manually performed by the IT professional (e.g., to convert the legacy application into the converted application) by utilizing artificial intelligence and/or by automating generation of the schema, conversion of the functional blocks of the legacy application into the code blocks of the converted application, and/or configuration of the code blocks to have the logical relationships. The example techniques may increase a user experience and/or efficiency of an end user who utilizes the legacy application, for example, by enabling the end user to benefit from the faster speed, greater efficiency, greater reliability, and/or lower cost associated with using the converted application in lieu of the legacy application.

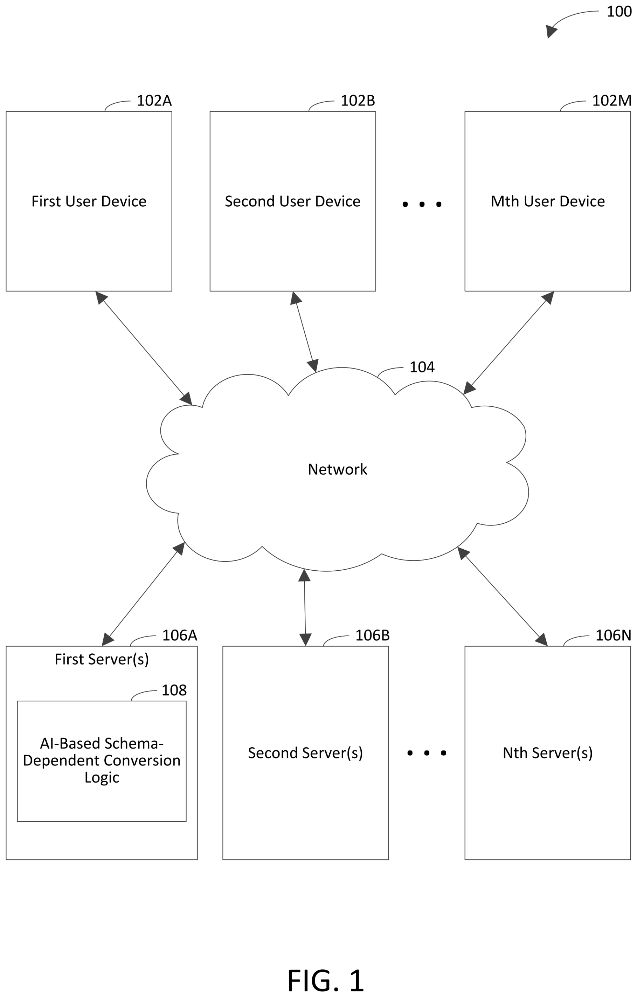

FIG. 1 is a block diagram of an example AI-based schema-dependent conversion system 100 in accordance with an embodiment. Generally speaking, the AI-based schema-dependent conversion system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the AI-based schema-dependent conversion system 100 causes an AI system to convert a legacy application into a converted application using a schema. Detail regarding techniques for causing an AI system to convert a legacy application into a converted application using a schema is provided in the following discussion.

As shown in FIG. 1, the AI-based schema-dependent conversion system 100 includes a plurality of user devices 102A-102M, a network 104, and a plurality of servers 106A-106N. Communication among the user devices 102A-102M and the servers 106A-106N is carried out over the network 104 using well-known network communication protocols. The network 104 may be a wide-area network (e.g., the Internet), a local area network (LAN), another type of network, or a combination thereof.

The user devices 102A-102M are computing systems that are capable of communicating with servers 106A-106N. A computing system is a system that includes at least a portion of a processor system such that the portion of the processor system includes at least one processor that is capable of manipulating data in accordance with a set of instructions. A processor system includes one or more processors, which may be on a same (e.g., single) device or distributed among multiple (e.g., separate) devices. For instance, a computing system may be a computer, a personal digital assistant, etc. The user devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M may access information that is available via the domains. Such domain may include Web pages, which may be provided as hypertext markup language (HTML) documents and objects (e.g., files) that are linked therein, for example.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The servers 106A-106N are computing systems that are capable of communicating with the user devices 102A-102M. The servers 106A-106N are configured to execute computer programs that provide information to users in response to receiving requests from the users. For example, the information may include documents (Web pages, images, audio files, video files, etc.), output of executables, or any other suitable type of information. In accordance with some example embodiments, the servers 106A-106N are configured to host respective Web sites, so that the Web sites are accessible to users of the AI-based schema-dependent conversion system 100.

The first server(s) 106A are shown to include AI-based schema-dependent conversion logic 108 for illustrative purposes. The AI-based schema-dependent conversion logic 108 is configured to cause an AI system to convert a legacy application into a converted application using a schema. In an example implementation, the AI-based schema-dependent conversion logic 108 causes an AI system to generate a schema, which defines functional blocks of a legacy application and logical relationships between the functional blocks. The AI-based schema-dependent conversion logic 108 causes the AI system to generate the schema by providing the legacy application and documentation, which describes the functional blocks and the logical relationships, as first inputs to the AI system. The AI-based schema-dependent conversion logic 108 causes the AI system to perform a conversion of the legacy application into a converted application by providing the schema and the legacy application as second inputs to the AI system. Performing the conversion comprises converting the functional blocks into code blocks by using the schema to identify the functional blocks. The functional blocks are configured to have respective functionalities and are written in a first programming language. The code blocks are configured to have the respective functionalities and are written in a second programming language that is different from the first programming language. Performing the conversion further comprises configuring the code blocks to have the logical relationships by using the schema to identify the logical relationships. The converted application is defined by the code blocks and the logical relationships.

In an aspect, performing the conversion comprises identifying the functional blocks using the schema, analyzing the functional blocks to determine the functionalities of the functional blocks, writing code that includes the functionalities in the second programming language, and defining the code blocks to include respective portions of the code that have the functionalities.

A legacy application is an application (e.g., a software program) that is written in a legacy programming language or a version of an application that has been replaced with an updated (e.g., newer) version of the application. A legacy programming language is a programming language that is less efficient, less supported, and/or less effective than other programming language(s) that are available for use. For instance, the legacy programming language may have been created long before such other programming language(s) became available. A programming language is a language that is used to communicate instructions to a machine.

The AI system includes one or more AI models. An AI model is a model that utilizes artificial intelligence to perform a task in response to an AI input that is received by the AI model. The AI model may be an artificial general intelligence model. An artificial general intelligence model is an AI model (e.g., an autonomous AI model) that is configured to be capable of performing any task that an intelligent being (e.g., a human) is capable of performing. In an example implementation, the artificial general intelligence model is capable of performing a task that surpasses the capabilities of an animal.

An AI input indicates (e.g., specifies) a task that is to be performed by an AI model. Examples of an AI input include but are not limited to an AI prompt and an application programming interface (API) input. An AI prompt is an AI input that causes an AI model to generate an answer that is responsive to the AI prompt. An answer to an AI prompt may be referred to as an AI response. Examples of an AI prompt include but are not limited to a zero-shot prompt, a one-shot prompt, and a few-shot prompt. A zero-shot prompt is a prompt that indicates a task to be performed by an AI model that has not been trained on example(s) of the task. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

An AI prompt may not be written in a natural language. For instance, the AI prompt may include (e.g., be) computer code. The AI prompt may be any suitable sequence of characters that is capable of being interpreted by an AI model.

An API input is an AI input that is provided via an API to request a service or a function. An API is an interface between a computing system and code (e.g., software or firmware).

The AI-based schema-dependent conversion logic 108 may be implemented in various ways to cause an AI system to convert a legacy application into a converted application using a schema, including being implemented in hardware, software, firmware, or any combination thereof. For example, the AI-based schema-dependent conversion logic 108 may be implemented as computer program code configured to be executed in one or more processors. In another example, at least a portion of the AI-based schema-dependent conversion logic 108 may be implemented as hardware logic/electrical circuitry. For instance, at least a portion of the AI-based schema-dependent conversion logic 108 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

The AI-based schema-dependent conversion logic 108 is shown to be incorporated in the first server(s) 106A for illustrative purposes and is not intended to be limiting. It will be recognized that the AI-based schema-dependent conversion logic 108 (or any portion(s) thereof) may be incorporated in any one or more of the servers 106A-106N, any one or more of the user devices 102A-102M, or any combination thereof. For example, client-side aspects of the AI-based schema-dependent conversion logic 108 may be incorporated in one or more of the user devices 102A-102M, and server-side aspects of AI-based schema-dependent conversion logic 108 may be incorporated in one or more of the servers 106A-106N.

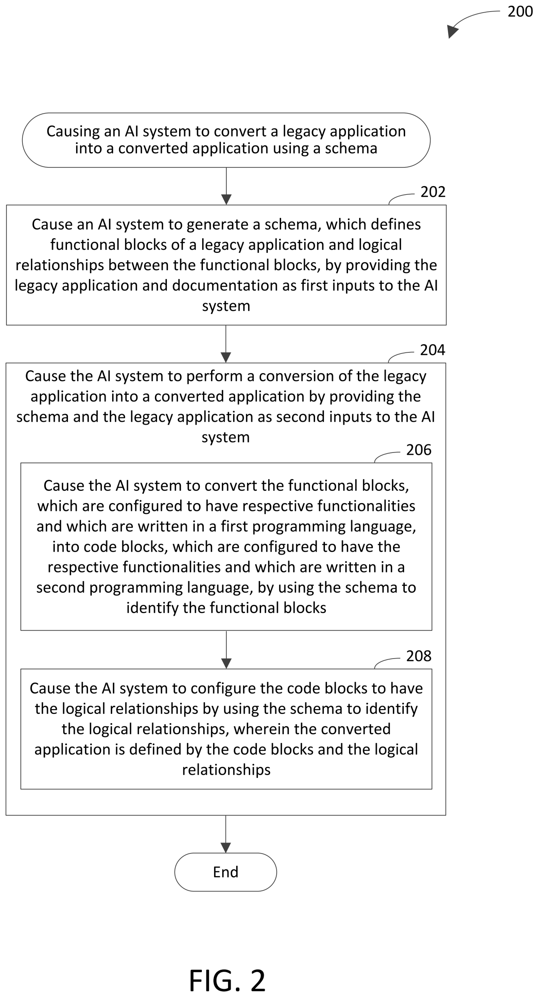

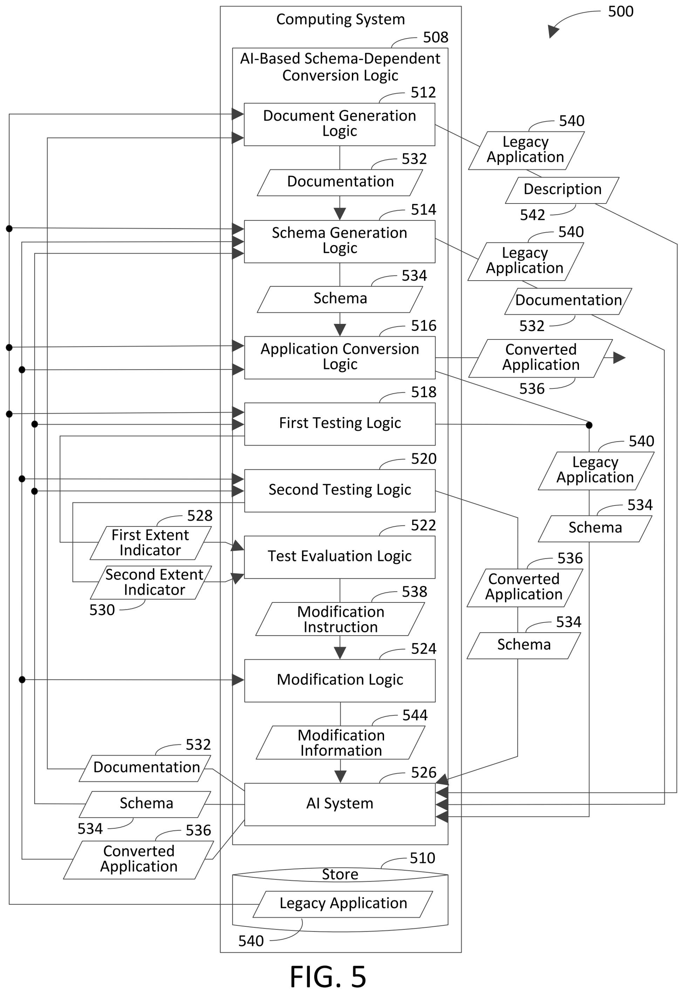

FIGS. 2-4 depict flowcharts 200, 300, and 400 of example methods for causing an AI system to convert a legacy application into a converted application using a schema in accordance with embodiments. Flowcharts 200, 300, and 400 may be performed by the first server(s) 106A shown in FIG. 1, for example. For illustrative purposes, flowcharts 200, 300, and 400 are described with respect to a computing system 500 shown in FIG. 5, which is an example implementation of the first server(s) 106A. As shown in FIG. 5, the computing system 500 includes AI-based schema-dependent conversion logic 508 and a store 510. The Al-based schema-dependent conversion logic 508 includes document generation logic 512, schema generation logic 514, application conversion logic 516, first testing logic 518, second testing logic 520, test evaluation logic 522, modification logic 524, and an AI system 526. The store 510 may be any suitable type of store. One type of store is a database. For instance, the store 510 may be a relational database, an entity-relationship database, an object database, an object relational database, an extensible markup language (XML) database, etc. The store 510 is shown to store a legacy application 540 of a user for non-limiting, illustrative purposes. Further structural and operational embodiments will be apparent to persons skilled in the relevant art(s) based on the discussion regarding flowcharts 200, 300, and 400.

As shown in FIG. 2, the method of flowchart 200 begins at step 202. In step 202, an AI system is caused to generate (e.g., automatically generate) a schema that defines functional blocks of a legacy application and logical relationships between the functional blocks. The AI system is caused to generate the schema by providing the legacy application and documentation, which describes the functional blocks and the logical relationships, as first inputs to the AI system. In an aspect, the documentation further describes a logical flow (e.g., code flow) of the legacy application. In another aspect, the documentation further describes how the legacy application uses data source(s). Examples of a data source include but are not limited to a file, a folder, and a database. For example, the documentation may map the functional blocks to data sources utilized (e.g., accessed) by the functional blocks. In yet another aspect, the schema is a structured query language (SQL) schema. A SQL schema is a schema that is defined (e.g., written) using a SQL language. The SQL language is a domain-specific language that is used to manage data (e.g., structured data), which may be stored in a relational database management system (RDBMS). Structured data is data that incorporates relations among entities and variables.

In an example implementation, the schema generation logic 514 causes the AI system 526 to generate a schema 534, which defines functional blocks of the legacy application 540 and logical relationships between the functional blocks. The schema generation logic 514 causes the AI system 526 to generate the schema by providing the legacy application 540 and documentation 532 as first inputs to the AI system 526. The documentation 532 describes the functional blocks and the logical relationships. In a first AI-based example, the schema generation logic 514 triggers the AI system 526 to generate the schema 534 by providing a first AI input together with first contextual information as the first inputs to the AI system 526. In accordance with the first AI-based example, the first AI input instructs the AI system 540 to generate the schema. For instance, the first AI input may instruct the AI system 540 to generate the schema 534 by taking the legacy application 540 and the documentation 532 into consideration. The first contextual information includes context regarding the first AI input. In further accordance with the first AI-based example, the first contextual information includes the legacy application 540 and the documentation 532.

In an aspect of the first AI-based example, the first AI input states, "Using these two files, please generate a schema. The first file includes a legacy application. The second file describes functional blocks of the legacy application and relationships between the functional blocks. The schema must define the functional blocks and the relationships." In accordance with this aspect, the first contextual information includes the two files.

In an example embodiment, causing the AI system to generate the schema at step 202 includes causing the AI system to replace an initial schema associated with the legacy application with the schema that defines the functional blocks and the logical relationships between the functional blocks.

In another example embodiment, the documentation further describes a first functional element in a first functional block, which is included in the functional blocks, and a variable that is referenced by the first functional block. Examples of a functional element include but are not limited to a variable, a function, a table, a field, and a user interface element.

In yet another example embodiment, causing the AI system to generate the schema at step 202 includes causing the AI system to limit respective sizes of the functional blocks of the legacy application to be less than or equal to a token limit of an AI model in the AI system. A token limit of an AI model represents a maximum amount of data that the AI model is capable of processing with regard to an AI input. In an aspect, an AI input that requests generation of the schema indicates that the respective sizes of the functional blocks are to be less than or equal to the token limit of the AI model in the AI system. In further accordance with this aspect, the AI system is caused to limit the respective sizes of the functional blocks by providing the AI input as an input to the AI system. In an example, the AI input is provided together with contextual information, which includes the legacy application and the documentation, as inputs to the AI system.

In still another example embodiment, causing the AI system to generate the schema at step 202 includes causing the AI system to configure the schema to rename items in the legacy application. Examples of an item include but are not limited to a variable, a function, a table, a field, and a user interface element.

At step 204, the AI system is caused to perform (e.g., automatically perform) a conversion of the legacy application into a converted application by providing the schema and the legacy application as second inputs to the AI system. In an aspect, the legacy application is converted into the converted application using a microservice-based web service. The microservice-based web service includes multiple microservices that are configured to performs respective portions of the conversion of the legacy application into the converted application. In an example, the microservice-based web service uses classes to define items in the legacy application. In another aspect, the converted application is functionally equivalent to the legacy application. In yet another aspect, conversion of the legacy application into the converted application is not merely a conversion of the syntax of the legacy application.

In an example implementation, the application conversion logic 516 causes the AI system to perform a conversion of the legacy application 540 into a converted application 536 by providing the schema 534 and the legacy application 540 as second inputs to the AI system 526. In a second AI-based example, the application conversion logic 516 triggers the AI system 526 to perform the conversion of the legacy application 540 into the converted application 536 by providing a second AI input together with second contextual information as the second inputs to the AI system 526. In accordance with the second AI-based example, the second AI input instructs the AI system 540 to convert the legacy application 540 into the converted application 536. For instance, the second AI input may instruct the AI system 540 to convert the legacy application 540 into the converted application 536 by taking the legacy application 540 and the schema 534 into consideration. In an aspect, the second AI input indicates (e.g., identifies or specifies) a programming language that is to be used to write the converted application 536, a framework (e.g., a development framework and/or a code conversion framework) that is to be used to convert the legacy application 540 into the converted application 536, and so on. The second contextual information includes context regarding the second AI input. In further accordance with the second AI-based example, the second contextual information includes the legacy application 540 and the schema 534.

In an aspect of the second AI-based example, the second AI input states, " File1 includes a legacy application written in COBOL^{®}. File2 includes a schema that defines functional blocks of the legacy application and relationships between the functional blocks. Please convert the legacy application in File1 into a new application that is written in in Python^{®} by using the schema in File2." In accordance with this aspect, the second contextual information includes File1 and File2.

In a framework embodiment, the AI system is caused to perform the conversion of the legacy application into the converted application at step 204 by using a development framework and/or a code conversion framework. A development framework is a framework that provides an infrastructure for developing (e.g., building and deploying) an application. In an aspect, the infrastructure provided by the development framework facilitates and/or enables development of the application. For instance, the infrastructure may include tools, libraries, and development strategies. Examples of a development framework include but are not limited to a Spring Boot^{®} development framework, which was originally developed by Pivotal Software, Inc. (now a subsidiary of VMware, Inc.) and is distributed by VMware, Inc., and a Node.js^{®} development framework, which was originally developed by Ryan Dahl and is distributed by the OpenJS Foundation.

A code conversion framework is a framework that includes tool(s) for transforming source code from a first programming language to a second programming language. In an aspect, the code conversion framework facilitates and/or enables transformation of the source code form the first programming language to the second programming language. Examples of a code conversion framework include but are not limited to ArtinSoft's Java^{®} Enterprise Edition (J2EE^{®}) to .NET^{®} code conversion framework, which is developed and distributed by ArtinSoft, Inc.; a CodePorting^{™} code conversion framework, which is developed and distributed by Recruitize Pty Ltd; and an OpenAI Codex^{®} code conversion framework, which is developed and distributed by OpenAI, Inc.

In an aspect, causing the AI system to use the development framework and/or the code conversion framework includes providing information that describes the development framework and/or the code conversion framework as third inputs (e.g., together with the second inputs mentioned above) to the AI system. In another aspect, causing the AI system to use the development framework and/or the code conversion framework includes ensuring that the converted application complies with the development framework and/or the code conversion framework.

Step 204 includes steps 206 and 208. At step 206, the AI system is caused to convert (e.g., automatically convert) the functional blocks into code blocks. The functional blocks are configured to have respective functionalities and which are written in a first programming language. The code blocks are configured to have the respective functionalities and are written in a second programming language that is different from the first programming language. The functional blocks are converted into the code blocks by using the schema to identify the functional blocks. Examples of a first programming language include but are not limited to COBOL^{®}, Fortran^{™}, Lisp^{™}, assembly, and algorithmic language (ALGOL^{™}) programming languages. Examples of a second programming language include but are not limited to Java^{®}, C#^{®}, Python^{®}, JavaScript^{®}, Ruby^{™}, Swift^{®}, Go^{™} (Golang), and Rust^{®} programming languages. In an aspect, causing the AI system to convert the functional blocks into the code blocks at step 206 includes causing the AI system to reconfigure the respective functionalities of the functional blocks to conform to the schema. In another aspect, causing the AI system to convert the functional blocks into the code blocks at step 206 includes causing the AI system to reduce duplication of elements in the functional blocks to create the code blocks in the converted application.

In an example implementation, the application conversion logic 516 causes the AI system 526 to convert the functional blocks of the legacy application 540 into code blocks of the converted application 536 by using the schema 534 to identify the functional blocks. The functional blocks of the legacy application 540 are configured to have the respective functionalities and are written in the first programming language. The code blocks of the converted application 536 are configured to have the respective functionalities and are written in the second programming language. In an example, the application conversion logic 516 causes the AI system 526 to convert the functional blocks of the legacy application 540 into code blocks of the converted application 536 by providing the legacy application 540 and the schema 534 as the second inputs to the AI system 526.

In an example embodiment, causing the AI system to convert the functional blocks into the code blocks at step 206 includes causing the AI system to convert a first functional block to a first code block by converting a first functional element having a first data type in the first functional block into a first code element having a second data type in the first code block as a result of the schema indicating the second data type. The first functional block is included in the functional blocks of the legacy application. The first code block is included in the code blocks of the converted application. The first data type and the second data type are different.

In another example embodiment, causing the AI system to convert the functional blocks into the code blocks at step 206 includes causing the AI system to convert a first functional block into a first code block by converting a first number of rows of information in the first functional block into a second number of rows of code in the first code block. The first functional block is included in the functional blocks of the legacy application. The first code block is included in the code blocks of the converted application. The first number of rows and the second number of rows are different.

In yet another example embodiment, causing the AI system to perform the conversion of the legacy application into the converted application at step 204 includes, at a first time instance, training the AI system on the schema. In accordance with this embodiment, causing the AI system to perform the conversion of the legacy application into the converted application at step 204 further includes, at a second time instance that follows the first time instance, causing the AI system to convert the functional blocks into the code blocks as a result of the AI system being trained on the schema by providing the legacy application to the AI system. In an aspect, performing the conversion in this manner enables the functional blocks to be larger as a result of the schema not being provided to the AI system at the second time instance.

In still another example embodiment, causing the AI system to perform the conversion of the legacy application into the converted application at step 204 by providing the schema together with the legacy application as the second inputs to the AI system. In an example, the schema and the legacy application are provided to the AI system simultaneously.

At step 208, the AI system is caused to configure (e.g., automatically configure) the code blocks to have the logical relationships by using the schema to identify the logical relationships. The converted application is defined by the code blocks and the logical relationships. In an example implementation, the application conversion logic 516 causes the AI system 526 to configure the code blocks of the converted application 536 to have the logical relationships by using the schema 534 to identify the logical relationships. The converted application 536 is defined by the code blocks and the logical relationships. In an example, the application conversion logic 516 causes the AI system 526 to configure the code blocks of the converted application 536 to have the logical relationships by providing the legacy application 540 and the schema 534 as the second inputs to the AI system 526.

In an example embodiment, the functional blocks of the legacy application include a first functional block and a second functional block. The first functional block has an identified dependency on the second functional block. In accordance with this embodiment, causing the AI system to convert the functional blocks into the code blocks at step 206 includes causing the AI system to convert the first and second functional blocks of the legacy application into first and second code blocks. In further accordance with this embodiment, causing the AI system to configure the code blocks to have the logical relationships defined by the schema at step 208 includes causing the AI system to configure the first code block to have a specified dependency on the second code block as a result of the schema defining the identified dependency of the first functional block on the second functional block.

In some example embodiments, one or more steps 202, 204, 206, and/or 208 of flowchart 200 may not be performed. Moreover, steps in addition to or in lieu of steps 202, 204, 206, and/or 208 may be performed. For instance, in an example embodiment, the method of flowchart 200 further includes causing the AI system to generate (e.g., automatically generate) the documentation, which describes the functional blocks and the logical relationships between the functional blocks, by providing the legacy application and a description of the legacy application as third inputs to the AI system. In an aspect, multiple versions of the documentation are generated. In an example, the multiple versions of the documentation correspond to respective use cases. Examples of a use case include but are not limited to a business user, a code analyst, and an engineer. For instance, the multiple versions of the documentation may have different amounts (e.g., levels) of detail about the converted application. In another example, the multiple versions of the documentation have respective formats (e.g., corresponding to respective use cases). In an example implementation, the documentation generation logic 512 causes the AI system 526 to generate the documentation 532, which describes the functional blocks and the logical relationships between the functional blocks, by providing the legacy application 540 and a description 542 of the legacy application 540 as third inputs to the AI system 526.

In an example of this embodiment, the legacy application is defined by a plurality of files. In accordance with this embodiment, causing the AI system to generate the documentation includes causing the AI system to identify the functional blocks of the legacy application by clustering (e.g., partitioning) respective subsets of the plurality of files into the functional blocks as a result of the respective subsets of the plurality of files being configured to have the respective functionalities.

In a third AI-based example, the documentation generation logic 512 triggers the AI system 526 to generate the documentation 532 by providing a third AI input together with third contextual information as the third inputs to the AI system 526. In accordance with the third AI-based example, the third AI input instructs the AI system 540 to generate a description of the functional blocks of the legacy application 540 and the logical relationships between the functional blocks. For instance, the third AI input may instruct the AI system 540 to generate the description of the functional blocks of the legacy application 540 and the logical relationships between the functional blocks by taking the legacy application 540 and the description 542 of the legacy application 540 into consideration. The third contextual information includes context regarding the third AI input. In further accordance with the third AI-based example, the third contextual information includes the legacy application 540 and the description 542. In accordance with this embodiment, the AI system is caused to generate the schema at step 202 as a result of the documentation being generated. In an aspect of this embodiment, the AI system is caused to perform the conversion of the legacy application into the converted application at step 204 by providing the schema, the legacy application, and the description of the legacy application as the second inputs to the AI system.

In an aspect of the third AI-based example, the third AI input states, "A legacy application is stored at location A. A file that describes the features of the legacy application is stored at location B. Please generate documentation that describes functional blocks of the legacy application and logical relationships between the functional blocks by using the file stored at location B." In accordance with this aspect, the third contextual information includes the legacy application stored at location A and the file stored at location B.

In another example embodiment, the method of flowchart 200 further includes causing the AI system to generate (e.g., automatically generate) a functional test, which is configured to evaluate an extent to which the code blocks of the converted application have the respective functionalities. In an example, the extent indicates (e.g., represents or is) a number of the code blocks that have the respective functionalities. In another example, the extent indicates a proportion of the code blocks that have the respective functionalities. In yet another example, the extent indicates a completeness (e.g., thoroughness) with which the code blocks implement the respective functionalities. In an aspect, the functional test is configured to evaluate an extent to which a first logical flow of the legacy application corresponds to a second logical flow of the converted application. In an example implementation, the second testing logic 520 causes the AI system 526 to generate the functional test, which is configured to evaluate an extent to which the code blocks of the converted application 536 have the respective functionalities. In an aspect, the second testing logic 520 triggers the AI system 526 to generate the functional test by providing the converted application 536 and the schema 534 as fourth inputs to the AI system 526.

In a fourth AI-based example, the second testing logic 520 triggers the AI system 526 to generate the functional test by providing a fourth AI input together with fourth contextual information as the fourth inputs to the AI system 526. In accordance with the fourth AI-based example, the fourth AI input instructs the AI system 526 to generate the functional test (e.g., to evaluate the extent to which the code blocks of the converted application 536 have the respective functionalities defined by the schema 534). For instance, the fourth AI input may instruct the AI system 526 to generate the functional test by taking the converted application 536 and the schema 534 into consideration. The fourth contextual information includes context regarding the fourth AI input. In further accordance with the fourth AI-based example, the fourth contextual information includes the converted application 536 and the schema 534.

In an aspect of the fourth AI-based example, the fourth AI input states, "Using these two files, please generate a functional test. The first file includes an application. The second file includes a schema that defines respective functionalities that code blocks of the application are required to have. The functional test must evaluate an extent to which the code blocks of the application have the respective functionalities defined by the schema." In accordance with this aspect, the fourth contextual information includes the two files.

In yet another example embodiment, the method of flowchart 200 further includes causing the AI system to generate (e.g., automatically generate) an integration test by providing the documentation and the schema as fourth inputs to the AI system. The integration test is configured to evaluate an extent to which interactions between the code blocks of the converted application correspond to the logical relationships defined by the schema. In an example, the extent indicates (e.g., represents or is) a number of the interactions between the code blocks correspond to the logical relationships. In another example, the extent indicates a proportion of the interactions between the code blocks correspond to the logical relationships. In yet another example, the extent indicates a completeness (e.g., thoroughness) with which the interactions between the code blocks correspond to the logical relationships. The documentation describes the logical relationships. In an example implementation, the second testing logic 520 causes the AI system 526 to generate the integration test, which is configured to evaluate an extent to which interactions between the code blocks of the converted application 536 correspond to the logical relationships defined by the schema 534, by providing the documentation 532, which describes the logical relationships, and the schema 534 as fifth inputs to the AI system 526.

In a fifth AI-based example, the second testing logic 520 triggers the AI system 526 to generate the integration test by providing a fifth AI input together with fifth contextual information as the fifth inputs to the AI system 526. In accordance with the fifth AI-based example, the fifth AI input instructs the AI system 526 to generate the integration test (e.g., to evaluate an extent to which interactions between the code blocks of the converted application 536 correspond to the logical relationships defined by the schema 534). For instance, the fifth AI input may instruct the AI system 526 to generate the integration test by taking the documentation 532 and the schema 534 into consideration. The fifth contextual information includes context regarding the fifth AI input. In further accordance with the fifth AI-based example, the fifth contextual information includes the documentation 532 and the schema 534.

In an aspect of the fifth AI-based example, the fifth AI input states, "Using these two files, please generate an integration test. The first file includes an application. The second file includes a schema that defines code blocks of the application and logical relationships between the code blocks. The integration test must evaluate an extent to which interactions between the code blocks correspond to the logical relationships defined by the schema." In accordance with this aspect, the fifth contextual information includes the two files.

In still another example embodiment, the method of flowchart 200 further includes causing the AI system to iteratively perform (e.g., automatically iteratively perform) a modification operation. The modification operation includes increasing an extent to which a first functionality of the legacy application corresponds to a second functionality of the converted application by alternately modifying the schema using the code blocks and modifying the code blocks using the schema. In an example implementation, the schema generation logic 514 and the application conversion logic 516 collaborate to cause the AI system 526 iteratively perform the modification operation, which increases an extent to which a first functionality of the legacy application 540 corresponds to a second functionality of the converted application 536. In accordance with this implementation, the schema generation logic 514 causes the AI system 526 to modify the schema 534 using the code blocks of the converted application 536, and the application conversion logic 516 causes the AI system 526 to modify the code blocks of the converted application 536 using the schema 534, alternately. In an aspect, a purpose of iteratively performing the modification operation is not to match the schema 534 to a previous (e.g., original) schema that was associated with the legacy code 540. Accordingly, alternately modifying the schema 534 using the code blocks of the converted application 536 and modifying the code blocks of the converted application 536 using the schema 534 is not intended to reduce a difference between the schema 534 and the previous schema.

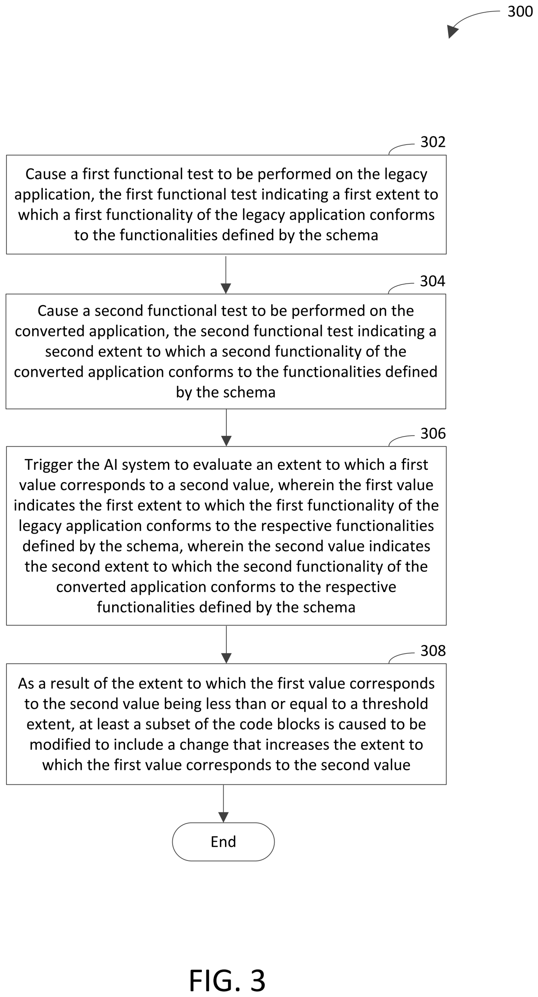

In another example embodiment, the method of flowchart 200 further includes one or more of the steps shown in flowchart 300 of FIG. 3. As shown in FIG. 3, the method of flowchart 300 begins at step 302. In step 302, a first functional test is caused (e.g., automatically caused) to be performed on the legacy application. The first functional test indicates a first extent to which a first functionality of the legacy application conforms to the functionalities defined by the schema. In an example implementation, the first testing logic 518 causes the first functional test to be performed on the legacy application 540. In accordance with this implementation, the first functional test indicates a first extent to which a first functionality of the legacy application 540 conforms to the functionalities defined by the schema 534.

In a first aspect of this implementation, the first testing logic 518 performs the first functional test on the legacy application 540. In accordance with this aspect, performance of the first functional test on the legacy application 540 results in a first extent indicator 528, which indicates the first extent to which the first functionality of the legacy application 540 conforms to the functionalities defined by the schema 534.

In a second aspect of this implementation, the first testing logic 518 triggers the AI system 526 to perform the first functional test on the legacy application 540 by providing the legacy application 540 and the schema 534 as sixth inputs to the AI system 526. In a sixth AI-based example, the first testing logic 518 triggers the AI system 526 to perform the first functional test on the legacy application 540 by providing a sixth AI input together with sixth contextual information as the sixth inputs to the AI system 526. In accordance with the sixth AI-based example, the sixth AI input instructs the AI system 526 to perform the first functional test on the legacy application 540 (e.g., by taking the legacy application 540 and the schema 534 into consideration). The sixth contextual information includes context regarding the sixth AI input. In further accordance with the sixth AI-based example, the sixth contextual information includes the legacy application 540 and the schema 534. In accordance with this aspect, the AI system 526 generates the first extent indicator 528 to indicate the first extent to which the first functionality of the legacy application 540 conforms to the functionalities defined by the schema 534. In further accordance with this aspect, the AI system 526 provides the first extent indicator 528 to the first testing logic 518 in response to the sixth AI input.

In an aspect of the sixth AI-based example, the sixth AI input states, "File1 includes a legacy application. File2 includes a schema that defines respective functionalities that functional blocks of the legacy application are required to have. Please perform a functional test on the legacy application to determine an extent to which functionality of the legacy application in File1 conforms to the functionalities defined by the schema in File2." In accordance with this aspect, the sixth contextual information includes File1 and File2.

The first testing logic 518 provides the first extent indicator 528 to the test evaluation logic 522 for processing.

At step 304, a second functional test is caused (e.g., automatically caused) to be performed on the converted application. The second functional test indicates a second extent to which a second functionality of the converted application conforms to the functionalities defined by the schema. In an example implementation, the second testing logic 520 causes the second functional test to be performed on the converted application 536. In accordance with this implementation, the second functional test indicates a second extent to which a second functionality of the converted application 536 conforms to the functionalities defined by the schema 534.

In a first aspect of this implementation, the second testing logic 520 performs the second functional test on the converted application 536. In accordance with this aspect, performance of the second functional test on the converted application 536 results in a second extent indicator 530, which indicates the second extent to which the second functionality of the converted application 536 conforms to the functionalities defined by the schema 534.

In a second aspect of this implementation, the second testing logic 520 triggers the AI system 526 to perform the second functional test on the converted application 536 by providing the converted application 536 and the schema 534 as seventh inputs to the AI system 526. In a seventh AI-based example, the second testing logic 520 triggers the AI system 526 to perform the second functional test on the converted application 536 by providing a seventh AI input together with seventh contextual information as the seventh inputs to the AI system 526. In accordance with the seventh AI-based example, the seventh AI input instructs the AI system 526 to perform the second functional test on the converted application 536 (e.g., by taking the converted application 536 and the schema 534 into consideration). The seventh contextual information includes context regarding the seventh AI input. In further accordance with the seventh AI-based example, the seventh contextual information includes the converted application 536 and the schema 534. In accordance with this aspect, the AI system 526 generates the second extent indicator 530 to indicate the second extent to which the second functionality of the converted application 536 conforms to the functionalities defined by the schema 534. In further accordance with this aspect, the AI system 526 provides the second extent indicator 530 to the second testing logic 520 in response to the seventh AI input.

In an aspect of the seventh AI-based example, the seventh AI input states, "File3 includes a converted application. File2 includes a schema that defines respective functionalities that code blocks of the converted application are required to have. Please perform a functional test on the converted application to determine an extent to which functionality of the converted application in File3 conforms to the functionalities defined by the schema in File2." In accordance with this aspect, the seventh contextual information includes File2 and File3.

The second testing logic 518 provides the second extent indicator 530 to the test evaluation logic 522 for processing.

At step 306, the AI system is triggered to evaluate (e.g., automatically evaluate) an extent to which a first value corresponds to a second value. The first value indicates the first extent to which the first functionality of the legacy application conforms to the respective functionalities defined by the schema. The second value indicates the second extent to which the second functionality of the converted application conforms to the respective functionalities defined by the schema. In an example implementation, the test evaluation logic 522 triggers the AI system 526 to evaluate the extent to which the first value corresponds to the second value. In accordance with this implementation, the first value indicates the first extent to which the first functionality of the legacy application 540 conforms to the respective functionalities defined by the schema 534. In further accordance with this implementation, the second value indicates the second extent to which the second functionality of the converted application 536 conforms to the respective functionalities defined by the schema 534. The test evaluation logic 522 causes the AI system 526 to analyze the first extent indicator 528 to determine the first value (i.e., the first extent to which the first functionality of the legacy application 540 conforms to the respective functionalities defined by the schema 534). The test evaluation logic 522 causes the AI system 526 to analyze the second extent indicator 530 to determine the second value (i.e., the second extent to which the second functionality of the converted application 536 conforms to the respective functionalities defined by the schema 534).

In an aspect of this implementation, the test evaluation logic 522 triggers the AI system 526 to evaluate the extent to which the first value corresponds to the second value by providing the first extent indicator 528 and the second extent indicator 530 as eighth inputs to the AI system 526. In an eighth AI-based example, the test evaluation logic 522 triggers the AI system 526 to evaluate the extent to which the first value corresponds to the second value by providing an eighth AI input together with eighth contextual information as the eighth inputs to the AI system 526. In accordance with the eighth AI-based example, the eighth AI input instructs the AI system 526 to evaluate the extent to which the first value corresponds to the second value (e.g., by taking the first extent indicator 528, which indicates the first value, and the second extent indicator 530, which indicates the second value, into consideration). The eighth contextual information includes context regarding the eighth AI input. In further accordance with the eighth AI-based example, the eighth contextual information includes the first extent indicator 528 and the second extent indicator 530. In accordance with this aspect, the test evaluation logic 522 receives an AI response to the eighth AI input from the AI system 526. The AI response to the eighth AI input indicates the extent to which the first value corresponds to the second value.

In an aspect of the eighth AI-based example, the eighth AI input states, "Please evaluate the extent to which the value of the indicator labeled 'Indicator1' corresponds to the value of the indicator labeled 'Indicator2'. The value of Indicator1 indicates the extent to which the functionality of the legacy application conforms to the respective functionalities defined by the schema. The value of Indicator2 indicates the extent to which the functionality of the converted application conforms to the respective functionalities defined by the schema." In accordance with this aspect, the eighth contextual information includes Indicator1 and Indicator2.

At step 308, as a result of the extent to which the first value corresponds to the second value being less than or equal to a threshold extent, at least a subset of the code blocks is caused (e.g., automatically caused) to be modified to include a change that increases the extent to which the first value corresponds to the second value. For instance, the threshold extent may be 90%, 95%, or 98%. In an aspect, modification of at least the subset of the code blocks resolves a compilation error associated with the converted application. In another aspect, modification of at least the subset of the code blocks resolves a runtime error associated with the converted application. In an example implementation, as a result of the extent to which the first value corresponds to the second value being less than or equal to the threshold extent, the modification logic 524 causes at least a subset of the code blocks of the converted application 536 to be modified to include the change that increases the extent to which the first value corresponds to the second value.

In an aspect of this implementation, the test evaluation logic 522 determines that the extent to which the first value corresponds to the second value is less than or equal to the threshold extent by comparing the first extent indicator 528 and the second extent indicator 530. In accordance with this aspect, the test evaluation logic 522 generates a modification instruction 538, which instructs the modification logic 524 to modify at least a subset of the code blocks of the converted application 536 to increase the extent to which the first value corresponds to the second value, as a result of the extent to which the first value corresponds to the second value being less than or equal to the threshold extent. In further accordance with this aspect, the modification logic 524 modifies at least the subset of the code blocks of the converted application 536 to include the change as a result of receiving the modification instruction 538 from the test evaluation logic 522.

In another aspect, the modification logic 524 triggers the AI system 526 to modify at least the subset of the code blocks of the converted application 536 to include the change by providing modification information 544 as ninth input(s) to the AI system 526. The modification information 544 includes at least the subset of the code blocks of the converted application 536, the first extent indicator 528, the second extent indicator 530, and/or the schema 534.

In a ninth AI-based example, the modification logic 524 triggers the AI system 526 to modify at least the subset of the code blocks of the converted application 536 to include the change by providing a ninth AI input together with ninth contextual information as the ninth input(s) to the AI system 526. In accordance with the ninth AI-based example, the ninth AI input instructs the AI system 526 to increase the extent to which the first value (i.e.., the first extent to which the first functionality of the legacy application 540 conforms to the respective functionalities defined by the schema 534) corresponds to the second value (i.e., the second extent to which the second functionality of the converted application 536 conforms to the respective functionalities defined by the schema 534) by modifying the converted application 536. For instance, the ninth AI input may suggest modifying the converted application 536 by taking at least the subset of the code blocks of the converted application 536, the first extent indicator 528, the second extent indicator 530, and/or the schema 534 into consideration. The ninth contextual information includes context regarding the ninth AI input. In further accordance with the ninth AI-based example, the ninth contextual information includes at least the subset of the code blocks of the converted application 536, the first extent indicator 528, the second extent indicator 530, and/or the schema 534.

In an aspect of the ninth AI-based example, the ninth AI input states, "Please modify the code blocks of the converted application as needed to increase the extent to which the first value indicated by Indicator1 corresponds to the second value indicated by Indicator2." In accordance with this aspect, the ninth contextual information includes Indicator1, Indicator2, and at least some of the code blocks of the converted application.

It will be recognized that performing the steps of flowchart 200 and/or flowchart 300 may reduce an amount of time and/or resources that is consumed to perform the first functional test on the legacy application and/or the second functional test on the converted application.

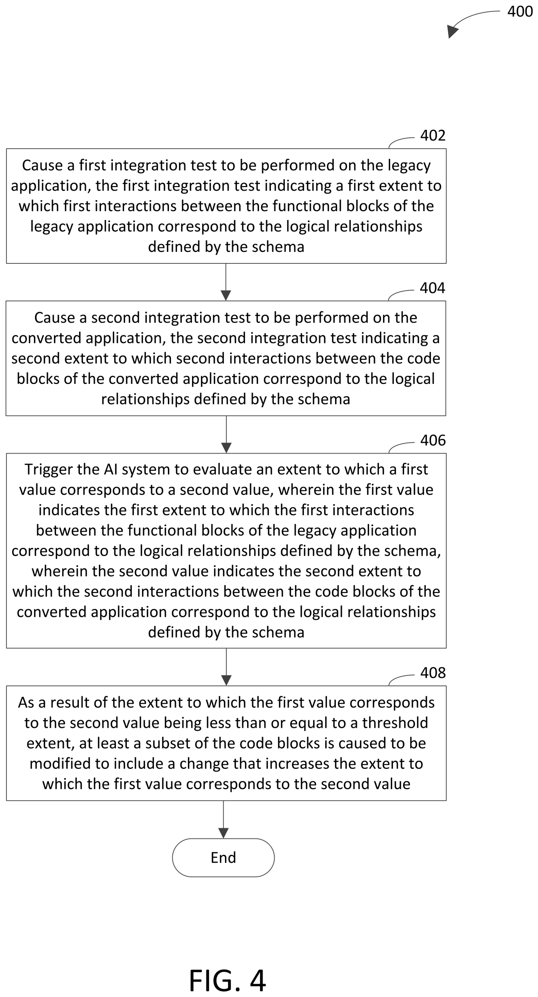

In yet another example embodiment, the method of flowchart 200 further includes one or more of the steps shown in flowchart 400 of FIG. 4. As shown in FIG. 4, the method of flowchart 400 begins at step 402. In step 402, a first integration test is caused (e.g., automatically caused) to be performed on the legacy application. The first integration test indicates a first extent to which first interactions between the functional blocks of the legacy application correspond to the logical relationships defined by the schema. In an example implementation, the first testing logic 518 causes the first integration test to be performed on the legacy application 540. In accordance with this implementation, the first integration test indicates a first extent to which first interactions between the functional blocks of the legacy application 540 correspond to the logical relationships defined by the schema 534.

In a first aspect of this implementation, the first testing logic 518 performs the first integration test on the legacy application 540. In accordance with this aspect, performance of the first integration test on the legacy application 540 results in a first extent indicator 528, which indicates the first extent to which the first interactions between the functional blocks of the legacy application 540 correspond to the logical relationships defined by the schema 534.

In a second aspect of this implementation, the first testing logic 518 triggers the AI system 526 to perform the first integration test on the legacy application 540 by providing the legacy application 540 and the schema 534 as tenth inputs to the AI system 526. In a tenth AI-based example, the first testing logic 518 triggers the AI system 526 to perform the first integration test on the legacy application 540 by providing a tenth AI input together with tenth contextual information as the tenth inputs to the AI system 526. In accordance with the tenth AI-based example, the tenth AI input instructs the AI system 526 to perform the first integration test on the legacy application 540 (e.g., by taking the legacy application 540 and the schema 534 into consideration). The tenth contextual information includes context regarding the tenth AI input. In further accordance with the tenth AI-based example, the tenth contextual information includes the legacy application 540 and the schema 534. In accordance with this aspect, the AI system 526 generates the first extent indicator 528 to indicate the first extent to which the first interactions between the functional blocks of the legacy application 540 correspond to the logical relationships defined by the schema 534. In further accordance with this aspect, the AI system 526 provides the first extent indicator 528 to the first testing logic 518 in response to the tenth AI input.

In an aspect of the tenth AI-based example, the tenth AI input states, "File1 includes a legacy application. File2 includes a schema that defines functional blocks of the legacy application and logical relationships between the functional blocks. Please perform an integration test on the legacy application in File1 to determine an extent to which interactions between the functional blocks correspond to the logical relationships defined by the schema in File2." In accordance with this aspect, the tenth contextual information includes File1 and File2.

The first testing logic 518 provides the first extent indicator 528 to the test evaluation logic 522 for processing.

At step 404, a second integration test is caused (e.g., automatically caused) to be performed on the converted application. The second integration test indicates a second extent to which second interactions between the code blocks of the converted application correspond to the logical relationships defined by the schema. In an example implementation, the second testing logic 520 causes the second integration test to be performed on the converted application 536. In accordance with this implementation, the second integration test indicates a second extent to which second interactions between the code blocks of the converted application 536 correspond to the logical relationships defined by the schema 534.

In a first aspect of this implementation, the second testing logic 520 performs the second integration test on the converted application 536. In accordance with this aspect, performance of the second integration test on the converted application 536 results in a second extent indicator 530, which indicates the second extent to which second interactions between the code blocks of the converted application 536 correspond to the logical relationships defined by the schema 534.

In a second aspect of this implementation, the second testing logic 520 triggers the AI system 526 to perform the second integration test on the converted application 536 by providing the converted application 536 and the schema 534 as eleventh inputs to the AI system 526. In an eleventh AI-based example, the second testing logic 520 triggers the AI system 526 to perform the second integration test on the converted application 536 by providing an eleventh AI input together with eleventh contextual information as the eleventh inputs to the AI system 526. In accordance with the eleventh AI-based example, the eleventh AI input instructs the AI system 526 to perform the second integration test on the converted application 536 (e.g., by taking the converted application 536 and the schema 534 into consideration). The eleventh contextual information includes context regarding the eleventh AI input. In further accordance with the eleventh AI-based example, the eleventh contextual information includes the converted application 536 and the schema 534. In accordance with this aspect, the AI system 526 generates the second extent indicator 530 to indicate the second extent to which second interactions between the code blocks of the converted application 536 correspond to the logical relationships defined by the schema 534. In further accordance with this aspect, the AI system 526 provides the second extent indicator 530 to the second testing logic 520 in response to the eleventh AI input.

In an aspect of the eleventh AI-based example, the eleventh AI input states, "File3 includes a converted application. File2 includes a schema that defines code blocks of the converted application and logical relationships between the code blocks. Please perform an integration test on the converted application in File1 to determine an extent to which interactions between the code blocks correspond to the logical relationships defined by the schema in File2." In accordance with this aspect, the eleventh contextual information includes File2 and File3.

The second testing logic 518 provides the second extent indicator 530 to the test evaluation logic 522 for processing.

At step 406, the AI system is triggered to evaluate (e.g., automatically evaluate) an extent to which a first value corresponds to a second value. The first value indicates the first extent to which the first interactions between the functional blocks of the legacy application correspond to the logical relationships defined by the schema. The second value indicates the second extent to which the second interactions between the code blocks of the converted application correspond to the logical relationships defined by the schema. In an example implementation, the test evaluation logic 522 triggers the AI system 526 to evaluate the extent to which the first value corresponds to the second value. In accordance with this implementation, the first value indicates the first extent to which the first interactions between the functional blocks of the legacy application 540 correspond to the logical relationships defined by the schema 534. In further accordance with this implementation, the second value indicates the second extent to which the second interactions between the code blocks of the converted application 536 correspond to the logical relationships defined by the schema 534. The test evaluation logic 522 causes the AI system 526 to analyze the first extent indicator 528 to determine the first value (i.e., the first extent to which the first interactions between the functional blocks of the legacy application 540 correspond to the logical relationships defined by the schema 534). The test evaluation logic 522 causes the AI system 526 to analyze the second extent indicator 530 to determine the second value (i.e., the second extent to which the second interactions between the code blocks of the converted application 536 correspond to the logical relationships defined by the schema 534).

At step 408, as a result of the extent to which the first value corresponds to the second value being less than or equal to a threshold extent, at least a subset of the code blocks is caused (e.g., automatically caused) to be modified to include a change that increases the extent to which the first value corresponds to the second value. For instance, the threshold extent may be 90%, 95%, or 98%. In an aspect, modification of at least the subset of the code blocks resolves a compilation error associated with the converted application. In another aspect, modification of at least the subset of the code blocks resolves a runtime error associated with the converted application. In an example implementation, as a result of the extent to which the first value corresponds to the second value being less than or equal to the threshold extent, the modification logic 524 causes at least a subset of the code blocks of the converted application 536 to be modified to include the change that increases the extent to which the first value corresponds to the second value.

In an aspect of this implementation, the test evaluation logic 522 determines that the extent to which the first value corresponds to the second value is less than or equal to the threshold extent by comparing the first extent indicator 528 and the second extent indicator 530. In accordance with this aspect, the test evaluation logic 522 generates a modification instruction 538, which instructs the modification logic 524 to modify at least a subset of the code blocks of the converted application 536 to increase the extent to which the first value corresponds to the second value, as a result of the extent to which the first value corresponds to the second value being less than or equal to the threshold extent. In further accordance with this aspect, the modification logic 524 modifies at least the subset of the code blocks of the converted application 536 to include the change as a result of receiving the modification instruction 538 from the test evaluation logic 522.

In another aspect, the modification logic 524 triggers the AI system 526 to modify at least the subset of the code blocks of the converted application 536 to include the change by providing modification information 524 as twelfth input(s) to the AI system 526. The modification information 524 includes at least the subset of the code blocks of the converted application 536, the first extent indicator 528, the second extent indicator 530, and/or the schema 534. In a twelfth AI-based example, the modification logic 524 triggers the AI system 526 to modify at least the subset of the code blocks of the converted application 536 to include the change by providing a twelfth AI input together with twelfth contextual information as the twelfth input(s) to the AI system 526. In accordance with the twelfth AI-based example, the twelfth AI input instructs the AI system 526 to increase the extent to which the first value (i.e.., the first extent to which the first interactions between the functional blocks of the legacy application 540 correspond to the logical relationships defined by the schema 534) corresponds to the second value (i.e., the second extent to which the second interactions between the code blocks of the converted application 536 correspond to the logical relationships defined by the schema 534) by modifying the converted application 536. For instance, the twelfth AI input may suggest modifying the converted application 536 by taking at least the subset of the code blocks of the converted application 536, the first extent indicator 528, the second extent indicator 530, and/or the schema 534 into consideration. The twelfth contextual information includes context regarding the twelfth AI input. In further accordance with the twelfth AI-based example, the twelfth contextual information includes at least the subset of the code blocks of the converted application 536, the first extent indicator 528, the second extent indicator 530, and/or the schema 534.

In an aspect of the twelfth AI-based example, the twelfth AI input states, "Please modify the code blocks of the converted application as needed to increase the extent to which the value of an indicator labeled 'Indicator1' corresponds to the value of an indicator labeled 'Indicator2.' The value of Indicator1 indicates the extent to which interactions between functional blocks of a legacy application correspond to logical relationships defined by a schema. The value of Indicator2 indicates the extent to which interactions between code blocks of a converted application correspond to the logical relationships defined by the schema." In accordance with this aspect, the twelfth contextual information includes Indicator1, Indicator2, and at least some of the code blocks of the converted application.

It will be recognized that performing the steps of flowchart 200 and/or flowchart 400 may reduce an amount of time and/or resources that is consumed to perform the first integration test on the legacy application and/or the second integration test on the converted application.

Any one or more of the operations described herein may be performed using the AI system 526. In an example embodiment, the document generation logic 512 causes (e.g., triggers) the AI system 526 to analyze (e.g., develop and/or refine an understanding of) the third AI input, the third contextual information (including the legacy application 540 and the description 542), relationships between any of the foregoing, and confidences in those relationships. For example, the document generation logic 512 may cause the AI system 526 to compare attributes of the third AI input and the third contextual information (including the legacy application 540 and the description 542) using artificial intelligence to generate the documentation 532. The third contextual information may further include sample AI input(s) and sample contextual information (e.g., sample legacy applications and sample descriptions thereof).

In another example embodiment, the schema generation logic 514 causes (e.g., triggers) the AI system 526 to analyze (e.g., develop and/or refine an understanding of) the first AI input, the first contextual information (including the legacy application 540 and the documentation 532), relationships between any of the foregoing, and confidences in those relationships. For example, the schema generation logic 514 may cause the AI system 526 to compare attributes of the first AI input and the first contextual information (including the legacy application 540 and the documentation 532) using artificial intelligence to generate the schema 534. The first contextual information may further include sample AI input(s) and sample contextual information (e.g., sample legacy applications and sample documentation thereof). In an aspect, the sample documentation describes sample functional blocks of the sample legacy applications and sample logical relationships between the sample functional blocks.

In yet another example embodiment, the application conversion logic 512 causes (e.g., triggers) the AI system 526 to analyze (e.g., develop and/or refine an understanding of) the second AI input, the second contextual information (including the legacy application 540 and the schema 534), relationships between any of the foregoing, and confidences in those relationships. For example, the application conversion logic 512 may cause the AI system 526 to compare attributes of the second AI input and the second contextual information (including the legacy application 540 and the schema 534) using artificial intelligence to generate the converted application 536. The second contextual information may further include sample AI input(s) and sample contextual information (e.g., sample legacy applications and sample schemas). In an aspect, the sample schemas define sample functional blocks of the sample legacy applications and sample logical relationships between the sample functional blocks.

In still another example embodiment, the first testing logic 518 causes (e.g., triggers) the AI system 526 to analyze (e.g., develop and/or refine an understanding of) the sixth and/or tenth AI input, the sixth and/or tenth contextual information (including the legacy application 540 and the schema 534), relationships between any of the foregoing, and confidences in those relationships. For example, the first testing logic 518 may cause the AI system 526 to compare attributes of the sixth AI input and the sixth contextual information (including the legacy application 540 and the schema 534) using artificial intelligence to perform the first functional test on the legacy application 540. In another example, the first testing logic 518 may cause the AI system 526 to compare attributes of the tenth AI input and the tenth contextual information (including the legacy application 540 and the schema 534) using artificial intelligence to perform the first integrated test on the legacy application 540. The sixth and/or tenth contextual information may further include sample AI input(s) and sample contextual information (e.g., sample legacy applications and sample schemas).

In another example embodiment, the second testing logic 520 causes (e.g., triggers) the AI system 526 to analyze (e.g., develop and/or refine an understanding of) the fourth, fifth, seventh, and/or eleventh AI input, the fourth, fifth, seventh, and/or eleventh contextual information (including the converted application 536, the schema 534, and/or the documentation 532), relationships between any of the foregoing, and confidences in those relationships. For example, the second testing logic 520 may cause the AI system 526 to compare attributes of the fourth AI input and the fourth contextual information (including the converted application 536 and the schema 534) using artificial intelligence to generate the functional test. In another example, the second testing logic 520 may cause the AI system 526 to compare attributes of the fifth AI input and the fifth contextual information (including the documentation 532 and the schema 534) using artificial intelligence to generate the integration test. In yet another example, the second testing logic 520 may cause the AI system 526 to compare attributes of the seventh AI input and the seventh contextual information (including the converted application 536 and the schema 534) using artificial intelligence to perform the second functional test on the converted application 536. In still another example, the second testing logic 520 may cause the AI system 526 to compare attributes of the eleventh AI input and the eleventh contextual information (including the converted application 536 and the schema 534) using artificial intelligence to perform the second integration test on the converted application 536. In another example, the first testing logic 518 may cause the AI system 526 to compare attributes of the tenth AI input and the tenth contextual information (including the legacy application 540 and the schema 534) using artificial intelligence to perform the first integrated test on the legacy application 540. The fourth, fifth, seventh, and/or eleventh contextual information may further include sample AI input(s) and sample contextual information (e.g., sample converted applications, sample schemas, and/or sample documentation). In an aspect, the sample documentation describes sample logical relationships between sample code blocks of the sample converted applications.

In yet another example embodiment, the test evaluation logic 522 causes (e.g., triggers) the AI system 526 to analyze (e.g., develop and/or refine an understanding of) the eighth AI input, the eighth contextual information (including the legacy application 540 and the schema 534), relationships between any of the foregoing, and confidences in those relationships. For example, test evaluation logic 522 may cause the AI system 526 to compare attributes of the eighth AI input and the eighth contextual information (including the first extent indicator 528 and the second extent indicator 530) using artificial intelligence to evaluate the extent to which the first value corresponds to the second value. The first value indicates the first extent to which the first functionality of the legacy application 540 conforms to the respective functionalities defined by the schema 534. The second value indicates the second extent to which the second functionality of the converted application 536 conforms to the respective functionalities defined by the schema 534. The eighth contextual information may further include sample AI input(s) and sample contextual information (e.g., sample indications of extents to which sample first functionalities of sample legacy applications conform to respective functionalities defined by sample schemas and sample indications of extents to which sample second functionalities of sample converted applications conform to the respective functionalities defined by the sample schemas).

In still another example embodiment, the modification logic 524 causes (e.g., triggers) the AI system 526 to analyze (e.g., develop and/or refine an understanding of) the ninth and/or twelfth AI input, the ninth and/or twelfth contextual information (including at least the subset of the code blocks of the converted application 536, the first extent indicator 528, the second extent indicator 530, and/or the schema 534), relationships between any of the foregoing, and confidences in those relationships. For example, the modification logic 524 may cause the AI system 526 to compare attributes of the ninth and/or twelfth AI input and the ninth and/or twelfth contextual information (including at least the subset of the code blocks of the converted application 536, the first extent indicator 528, the second extent indicator 530, and/or the schema 534) using artificial intelligence to modify at least the subset of the code blocks of the converted application 536 to include the change that increases the extent to which the first value corresponds to the second value. The ninth and/or twelfth contextual information may further include sample AI input(s) and sample contextual information (e.g., sample code blocks of sample converted applications, sample first extent indicators, sample second extent indicators, and sample schemas). The sample first extent indicators indicate sample first extents to which first interactions between sample functional blocks of sample legacy applications correspond to sample logical relationships defined by sample schemas. The sample second extent indicators indicate sample second extents to which second interactions between sample code blocks of sample converted applications correspond to the sample logical relationships defined by the sample schemas.

In some example embodiments, the AI system 526 includes a neural network that uses the artificial intelligence to determine (e.g., predict) relationships between any of the AI inputs described herein and any of the corresponding contextual information and confidences in the relationships. The neural network uses those relationships to generate the corresponding AI responses. For example, attributes of the AI input, the contextual information, and potentially example AI input(s) and example AI response(s) to the AI input(s) may be compared to determine similarities and differences between those attributes. In accordance with this example, the neural network may use those similarities and differences to generate the corresponding AI responses.

Examples of a neural network include but are not limited to a feed forward neural network and a transformer-based neural network. A feed forward neural network is an artificial neural network for which connections between units in the neural network do not form a cycle. The feed forward neural network allows data to flow forward (e.g., from the input nodes toward to the output nodes), but the feed forward neural network does not allow data to flow backward (e.g., from the output nodes toward to the input nodes). In an example embodiment, the document generation logic 512, the schema generation logic 514, the application conversion logic 516, the first testing logic 518, the second testing logic 520, the test evaluation logic 522, and/or the modification logic 524 employs a feed forward neural network to train the AI system 526 (e.g., at least one AI model therein), which is used to determine AI-based confidences. Such AI-based confidences may be used to determine likelihoods that events will occur.

A transformer-based neural network is a neural network that incorporates a transformer. A transformer is a deep learning model that utilizes attention to differentially weight the significance of each portion of sequential input data, such as natural language. Attention is a technique that mimics cognitive attention. Cognitive attention is a behavioral and cognitive process of selectively concentrating on a discrete aspect of information while ignoring other perceivable aspects of the information. Accordingly, the transformer uses the attention to enhance some portions of the input data while diminishing other portions. The transformer determines which portions of the input data to enhance and which portions of the input data to diminish based on the context of each portion. For instance, the transformer may be trained to identify the context of each portion using any suitable technique, such as gradient descent.

In an example embodiment, the transformer-based neural network generates an application conversion model (e.g., to convert a legacy application into a converted application using a schema) by utilizing information, such as AI inputs, contextual information, relationships between any of the foregoing, and AI-based confidences that are derived therefrom.

In example embodiments, the document generation logic 512, the schema generation logic 514, the application conversion logic 516, the first testing logic 518, the second testing logic 520, the test evaluation logic 522, and/or the modification logic 524 includes training logic, and the AI system 526 includes inference logic. The training logic is configured to train an AI algorithm that the inference logic uses to determine (e.g., infer) the AI-based confidences. For instance, the training logic may provide sample AI inputs and sample contextual information as inputs to the AI algorithm to train the AI algorithm. The sample data may be labeled. The AI algorithm may be configured to derive relationships between the features (e.g., the AI input and the contextual information) and the resulting AI-based confidences. The inference logic is configured to utilize the AI algorithm, which is trained by the training logic, to determine the AI-based confidence when the features are provided as inputs to the algorithm.

In an example embodiment, the AI system 526 includes (e.g., is) a generative language model. A generative language model is an AI model that is capable of generating original text output based on sample data. Examples of a generative language model include but are not limited to a generative pre-trained transformer 3 (GPT-3^{®}) model and a generative pre-trained transformer 4 (GPT-4^{®}) model, developed and distributed by OpenAI, Inc.; a Phi^{™} model and a Turing-NLG^{™} model, developed and distributed by Microsoft Corporation; a large language model Meta AI (LLaMA^{®}) model, developed and distributed by Meta Platforms Inc.; a language model for dialogue applications (LaMDA^{®}) model and a Gemini^{®} model, developed and distributed by Google LLC; and a BigScience large open-science open-access multilingual language model (BLOOM) model, developed and distributed by the BigScience collaborative initiative. A generative language model may use any suitable relevancy determination and/or ranking technique. For instance, the generative language model may use a BM25 (Okapi BM25) ranking function to perform its analysis (e.g., based on keywords).

In another example embodiment, the AI system 526 includes a large language model (LLM). A large language model is an artificial neural network that is capable of performing natural language processing (NLP) tasks. For instance, the large language model may use a transformer model to perform the NLP tasks. In an aspect, the large language model is trained (e.g., pre-trained) using self-supervised learning and semi-supervised learning. Examples of a large language model include but are not limited to the GPT-3^{®} and GPT-4^{®} models, developed and distributed by OpenAI, Inc.; the LLaMA^{®} model, developed and distributed by Meta Platforms Inc.; and a pathways language model (PaLM^{®}) model and the Gemini^{®} model, developed and distributed by Google LLC.

In yet another example embodiment, the AI system 526 includes an embedding model. An embedding model is an AI model that uses deep learning to convert data into vectors, which represent attributes of the data, and that compares at least a subset of the vectors to determine an extent to which the vectors that are included in the subset are similar. For instance, each vector may represent a semantic meaning of one or more AI inputs, one or more instances of contextual information, and/or one or more AI responses. In an aspect of this embodiment, the AI system 526 (e.g., at least one AI model therein) generates an AI response to an AI input described herein using an embedding model. In an example of this aspect, the embedding model is an encoder-only model. One example of an encoder-only model is the bidirectional encoder representations from transformers (BERT^{™}) model, which is developed and distributed by Google LLC. In another example of this aspect, the embedding model is a decoder-only model. In yet another example of this aspect, the embedding model is an encoder-decoder model. One example of an encoder-decoder model is the FLAN-T5^{™} model, which is developed and distributed by Google LLC.

In still another example embodiment, the AI system 526 includes multiple types of AI models. Weights may be applied to the responses generated by the respective types of AI models. For example, the AI system 526 may include a generative AI model and an embedding model. In accordance with this example, a first weight may be applied to a first response generated by the generative AI model to provide a first weighted response, and a second weight that is different from the first weight may be applied to a second response of the embedding model to provide a second weighted response. The AI system 526 may combine (e.g., sum) the first weighted response and the second weighted response to generate a response of the AI system 526.

In an example of this embodiment, the legacy application is defined by a plurality of files. In accordance with this embodiment, generating the documentation includes identifying the functional blocks of the legacy application by clustering (e.g., partitioning) respective subsets of the plurality of files into the functional blocks as a result of the respective subsets of the plurality of files being configured to have the respective functionalities

The AI system 526 may define subsets of a plurality of files that define the legacy application 540 using a clustering algorithm or a gradient algorithm. In an example clustering embodiment, the AI system 526 clusters the subsets of the plurality of files into respective clusters by analyzing embeddings that represent the files using a clustering algorithm. The clustering algorithm may be density-based, distribution-based, centroid-based, or hierarchical-based. A density-based clustering algorithm clusters data points (e.g., the subsets of the communications), which are included in an area having a relatively high concentration of data points that is surrounded by area(s) having a relatively low concentration of data points, into a cluster. A distribution-based clustering algorithm clusters data points into clusters based on a distance of each data point to the center of each of multiple clusters, such that the data point is included in the cluster having a center that is closer to the data point than the center of each other cluster. A centroid-based clustering algorithm clusters data points into clusters based on a squared distance of each data point from each of multiple centroids in the data, such that the data point is included in the cluster corresponding to the centroid with the shortest squared distance to the data point. A hierarchical-based clustering algorithm clusters data points based on which of multiple hierarchical levels of a hierarchy includes the data points. For example, data points corresponding to a first hierarchical level are clustered into a first cluster; data points corresponding to a second hierarchical level are clustered into a second cluster, and so on.

In an aspect of the clustering embodiment, the subsets of the plurality of files are clustered into respective clusters as a result of the subsets of the plurality of files corresponding to respective functionalities. For example, a first subset of the plurality of files may be clustered into a first cluster as a result of the first subset of the plurality of files sharing a first functionality. A second subset of the plurality of files may be clustered into a second cluster as a result of the second subset of the plurality of files sharing a second functionality, and so on. In another example, each cluster may consist of a designated (e.g., fixed) number (e.g., 2, 3, or 10) of files from the plurality of files.

In another aspect of the clustering embodiment, the clustering algorithm is a K-means clustering algorithm. The K-means clustering algorithm is an unsupervised learning centroid-based clustering algorithm. In an aspect, the K-means clustering algorithm attempts to minimize the variance of data points within each cluster.

In yet another aspect of the clustering embodiment, the clustering algorithm is a density-based spatial clustering of applications with noise (DBSCAN) clustering algorithm. As indicated by its name, the DBSCAN clustering algorithm is a density-based clustering algorithm. The DBSCAN clustering algorithm defines arbitrarily shaped clusters based on density of data points in regions that are separated by areas of low-density.

Other examples of a clustering algorithm include but are not limited to a Gaussian mixture clustering algorithm, a balance iterative reducing and clustering using hierarchies (BIRCH) clustering algorithm, an affinity propagation clustering algorithm, a mean-shifting clustering algorithm, an ordering points to identify the clustering structure (OPTICS) clustering algorithm, and an agglomerative hierarchy clustering algorithm.

It will be recognized that the computing system 500 may not include one or more of the AI-based schema-dependent conversion logic 508, the store 510, the document generation logic 512, the schema generation logic 514, the application conversion logic 516, the first testing logic 518, the second testing logic 520, the test evaluation logic 522, the modification logic 524, and/or the AI system 526. Furthermore, the computing system 500 may include components in addition to or in lieu of the AI-based schema-dependent conversion logic 508, the store 510, the document generation logic 512, the schema generation logic 514, the application conversion logic 516, the first testing logic 518, the second testing logic 520, the test evaluation logic 522, the modification logic 524, and/or the AI system 526.

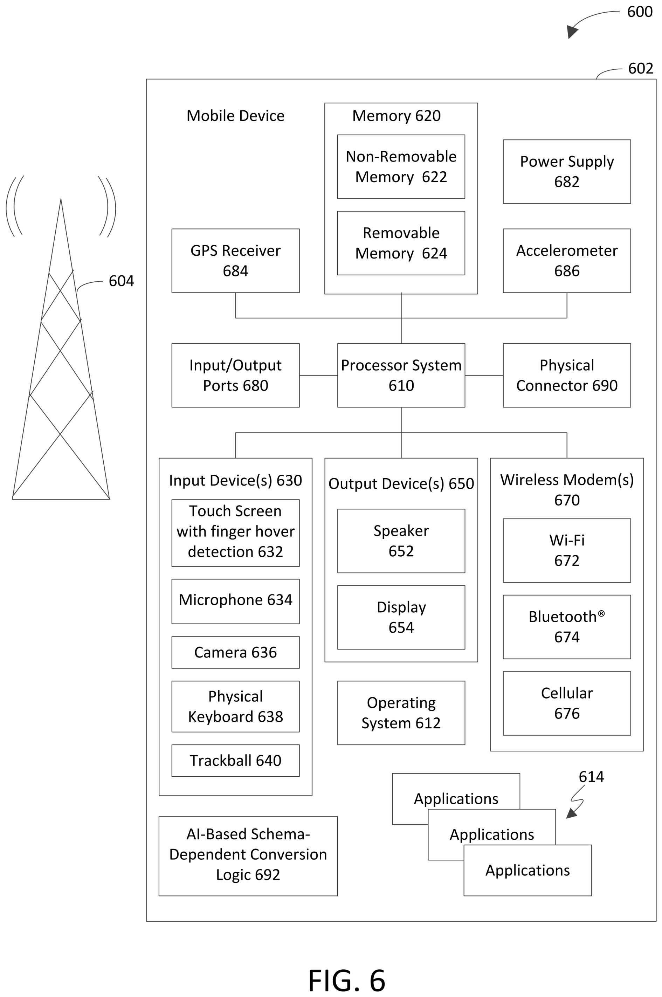

FIG. 6 is a system diagram of an example mobile device 600 including a variety of optional hardware and software components, shown generally as 602. Any components 602 in the mobile device may communicate with any other component, though not all connections are shown, for ease of illustration. The mobile device 600 may be any of a variety of computing devices (e.g., cell phone, smartphone, handheld computer, Personal Digital Assistant (PDA), etc.) and may allow wireless two-way communications with one or more mobile communications networks 604, such as a cellular or satellite network, or with a local area or wide area network.

The mobile device 600 includes a processor system 610 (e.g., signal processor, microprocessor, ASIC, or other control and processing logic circuitry) for performing such tasks as signal coding, data processing, input/output processing, power control, and/or other functions. An operating system 612 may control the allocation and usage of the components 602 and support for one or more applications 614. The applications 614 may include common mobile computing applications (e.g., email applications, calendars, contact managers, web browsers, messaging applications) and any other computing applications (e.g., word processing applications, mapping applications, media player applications).

The mobile device 600 includes AI-based schema-dependent conversion logic 692, which is operable in a manner similar to the AI-based schema-dependent conversion logic 108 described above with reference to FIG. 1 and/or the AI-based schema-dependent conversion logic 508 described above with reference to FIG. 5.

The mobile device 600 includes memory 620. The memory 620 may include non-removable memory 622 and/or removable memory 624. The non-removable memory 622 may include random access memory (RAM), read-only memory (ROM), flash memory, a hard disk, or other well-known memory storage technologies. The removable memory 624 may include flash memory or a Subscriber Identity Module (SIM) card, which is well known in Global System for Mobile Communications (GSM) systems, or other well-known memory storage technologies, such as "smart cards." The memory 620 may store data and/or code for running the operating system 612 and the applications 614. Example data may include web pages, text, images, sound files, video data, or other data sets to be sent to and/or received from one or more network servers or other devices via one or more wired or wireless networks. Memory 620 may store a subscriber identifier, such as an International Mobile Subscriber Identity (IMSI), and an equipment identifier, such as an International Mobile Equipment Identifier (IMEI). Such identifiers may be transmitted to a network server to identify users and equipment.

The mobile device 600 may support one or more input devices 630, such as a touch screen 632, microphone 634, camera 636, physical keyboard 638 and/or trackball 640 and one or more output devices 650, such as a speaker 652 and a display 654. Touch screens, such as the touch screen 632, may detect input in different ways. For example, capacitive touch screens detect touch input when an object (e.g., a fingertip) distorts or interrupts an electrical current running across the surface. As another example, touch screens may use optical sensors to detect touch input when beams from the optical sensors are interrupted. Physical contact with the surface of the screen is not necessary for input to be detected by some touch screens. For example, the touch screen 632 may support a finger hover detection using capacitive sensing, as is well understood. Other detection techniques may be used, including camera-based detection and ultrasonic-based detection. To implement a finger hover, a user's finger is typically within a predetermined spaced distance above the touch screen, such as between 0.1 to 0.25 inches, or between 0.25 inches and 0.5 inches, or between 0.5 inches and 0.75 inches, or between 0.75 inches and 1 inch, or between 1 inch and 1.5 inches, etc.

Other possible output devices (not shown) may include piezoelectric or other haptic output devices. Some devices may serve more than one input/output function. For example, touch screen 632 and display 654 may be combined in a single input/output device. The input devices 630 may include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods). Thus, in one specific example, the operating system 612 or applications 614 may include speech-recognition software as part of a voice control interface that allows a user to operate the mobile device 600 via voice commands. Furthermore, the mobile device 600 may include input devices and software that allows for user interaction via a user's spatial gestures, such as detecting and interpreting gestures to provide input to a gaming application.

Wireless modem(s) 670 may be coupled to antenna(s) (not shown) and may support two-way communications between the processor system 610 and external devices, as is well understood in the art. The modem(s) 670 are shown generically and may include a cellular modem 676 for communicating with the mobile communication network 604 and/or other radio-based modems (e.g., Bluetooth^{®} 674 and/or Wi-Fi 672). At least one of the wireless modem(s) 670 is typically configured for communication with one or more cellular networks, such as a GSM network for data and voice communications within a single cellular network, between cellular networks, or between the mobile device and a public switched telephone network (PSTN).

The mobile device 600 may further include at least one input/output port 680, a power supply 682, a satellite navigation system receiver 684, such as a Global Positioning System (GPS) receiver, an accelerometer 686, and/or a physical connector 690, which may be a universal serial bus (USB) port, IEEE 1394 (FireWire) port, and/or RS-232 port. The illustrated components 602 are not required or all-inclusive, as any components may be deleted and other components may be added as would be recognized by one skilled in the art.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the AI-based schema-dependent conversion logic 108, the AI-based schema-dependent conversion logic 508, the document generation logic 512, the schema generation logic 514, the application conversion logic 516, the first testing logic 518, the second testing logic 520, the test evaluation logic 522, the modification logic 524, the AI system 526, flowchart 200, flowchart 300, and/or flowchart 400 may be implemented in hardware, software, firmware, or any combination thereof.

For example, any one or more of the AI-based schema-dependent conversion logic 108, the AI-based schema-dependent conversion logic 508, the document generation logic 512, the schema generation logic 514, the application conversion logic 516, the first testing logic 518, the second testing logic 520, the test evaluation logic 522, the modification logic 524, the AI system 526, flowchart 200, flowchart 300, and/or flowchart 400 may be implemented, at least in part, as computer program code configured to be executed in one or more processors.

In another example, any one or more of the AI-based schema-dependent conversion logic 108, the AI-based schema-dependent conversion logic 508, the document generation logic 512, the schema generation logic 514, the application conversion logic 516, the first testing logic 518, the second testing logic 520, the test evaluation logic 522, the modification logic 524, the AI system 526, flowchart 200, flowchart 300, and/or flowchart 400 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### II. Further Discussion of Some Example Embodiments

(A1) An example system (Figure 1, 102A-102M, 106A-106N; Figure 5, 500; Figure 6, 602; Figure 7, 700) comprises a processor system (Figure 6, 610; Figure 7, 702) and a memory (Figure 6, 620, 622, 624; Figure 7, 74, 708, 710) that stores computer-executable instructions. The computer-executable instructions are executable by the processor system to at least cause (Figure 2, 202) an artificial intelligence system (Figure 5, 526) to generate a schema (Figure 5, 534), which defines functional blocks of a legacy application (Figure 5, 540) and logical relationships between the functional blocks, by providing the legacy application and documentation (Figure 5, 532), which describes the functional blocks and the logical relationships, as first inputs to the artificial intelligence system. The computer-executable instructions are executable by the processor system further to at least cause (Figure 2, 204) the artificial intelligence system to perform a conversion of the legacy application into a converted application (Figure 5, 536) by providing the schema and the legacy application as second inputs to the artificial intelligence system. The conversion comprises: convert the functional blocks, which are configured to have respective functionalities and which are written in a first programming language, into code blocks, which are configured to have the respective functionalities and which are written in a second programming language that is different from the first programming language, by using the schema to identify the functional blocks; and configure the code blocks to have the logical relationships by using the schema to identify the logical relationships. The converted application is defined by the code blocks and the logical relationships.
(A2) In the example system of A1, wherein the computer-executable instructions are executable by the processor system to at least: cause the artificial intelligence system to generate the documentation by providing the legacy application and a description of the legacy application as third inputs to the artificial intelligence system; and cause the artificial intelligence system to generate the schema as a result of the documentation being generated.
(A3) In the example system of any one of A1-A2, wherein the computer-executable instructions are executable by the processor system to at least: cause the artificial intelligence system to identify the functional blocks of the legacy application by clustering respective subsets of a plurality of files that define the legacy application into the functional blocks as a result of the respective subsets of the plurality of files being configured to have the respective functionalities.
(A4) In the example system of any one of A1-A3, wherein the computer-executable instructions are executable by the processor system further to at least: cause the artificial intelligence system to generate a functional test, which is configured to evaluate an extent to which the code blocks of the converted application have the respective functionalities.
(A5) In the example system of any one of A1-A4, wherein the computer-executable instructions are executable by the processor system further to at least: cause a first functional test to be performed on the legacy application, the first functional test indicating a first extent to which a first functionality of the legacy application conforms to the functionalities defined by the schema; cause a second functional test to be performed on the converted application, the second functional test indicating a second extent to which a second functionality of the converted application conforms to the functionalities defined by the schema; and triggering the artificial intelligence system to evaluate an extent to which a first value corresponds to a second value, wherein the first value indicates the first extent to which the first functionality of the legacy application conforms to the respective functionalities defined by the schema, wherein the second value indicates the second extent to which the second functionality of the converted application conforms to the respective functionalities defined by the schema.
(A6) In the example system of any one of A1-A5, wherein the computer-executable instructions are executable by the processor system further to at least: as a result of the extent to which the first value corresponds to the second value being less than or equal to a threshold extent, cause the artificial intelligence system to modify at least a subset of the code blocks to include a change that increases the extent to which the first value corresponds to the second value.
(A7) In the example system of any one of A1-A6, wherein the computer-executable instructions are executable by the processor system further to at least: cause the artificial intelligence system to generate an integration test, which is configured to evaluate an extent to which interactions between the code blocks of the converted application correspond to the logical relationships defined by the schema, by providing the documentation and the schema as third inputs to the artificial intelligence system.
(A8) In the example system of any one of A1-A7, wherein the computer-executable instructions are executable by the processor system further to at least: cause a first integration test to be performed on the legacy application, the first integration test indicating a first extent to which first interactions between the functional blocks of the legacy application correspond to the logical relationships defined by the schema; cause a second integration test to be performed on the converted application, the second integration test indicating a second extent to which second interactions between the code blocks of the converted application correspond to the logical relationships defined by the schema; and trigger the artificial intelligence system to evaluate an extent to which a first value corresponds to a second value, wherein the first value indicates the first extent to which the first interactions between the functional blocks of the legacy application correspond to the logical relationships defined by the schema, wherein the second value indicates the second extent to which the second interactions between the code blocks of the converted application correspond to the logical relationships defined by the schema.
(A9) In the example system of any one of A1-A8, wherein the computer-executable instructions are executable by the processor system further to at least: as a result of the extent to which the first value corresponds to the second value being less than or equal to a threshold extent, cause the artificial intelligence system to modify at least a subset of the code blocks to include a change that increases the extent to which the first value corresponds to the second value.
(A10) In the example system of any one of A1-A9, wherein the computer-executable instructions are executable by the processor system further to at least: cause the artificial intelligence system to iteratively perform a modification operation using the artificial intelligence system, wherein the modification operation comprises increasing an extent to which a first functionality of the legacy application corresponds to a second functionality of the converted application by alternately modifying the schema using the code blocks and modifying the code blocks using the schema.
(A11) In the example system of any one of A1-A10, wherein the functional blocks of the legacy application include a first functional block and a second functional block, the first functional block having an identified dependency on the second functional block; and wherein the computer-executable instructions are executable by the processor system to at least: cause the artificial intelligence system to convert the first and second functional blocks of the legacy application into first and second code blocks; and cause the artificial intelligence system to configure the first code block to have a specified dependency on the second code block as a result of the schema defining the identified dependency of the first functional block on the second functional block.
(A12) In the example system of any one of A1-A11, wherein the computer-executable instructions are executable by the processor system to at least: cause the artificial intelligence system to replace an initial schema associated with the legacy application with the schema that defines the functional blocks and the logical relationships between the functional blocks.
(A13) In the example system of any one of A1-A12, wherein the documentation further describes a first functional element in a first functional block, which is included in the functional blocks, and a variable that is referenced by the first functional block.
(A14) In the example system of any one of A1-A13, wherein the computer-executable instructions are executable by the processor system to at least: cause the artificial intelligence system to limit respective sizes of the functional blocks of the legacy application to be less than or equal to a token limit of the artificial intelligence system.
(A15) In the example system of any one of A1-A14, wherein the computer-executable instructions are executable by the processor system to at least: cause the artificial intelligence system to configure the schema to rename items in the legacy application.
(A16) In the example system of any one of A1-A15, wherein the computer-executable instructions are executable by the processor system to at least: at a first time instance, train the artificial intelligence system on the schema; and at a second time instance that follows the first time instance, cause the artificial intelligence system to convert the functional blocks into the code blocks as a result of the artificial intelligence system being trained on the schema by providing the legacy application to the artificial intelligence system.
(A17) In the example system of any one of A1-A16, wherein the computer-executable instructions are executable by the processor system to at least: cause the artificial intelligence system to convert a first functional block, which is included in the functional blocks of the legacy application, to a first code block, which is included in the code blocks of the converted application, by converting a first functional element having a first data type in the first functional block into a first code element having a second data type, which is different from the first data type, in the first code block as a result of the schema indicating the second data type.
(A18) In the example system of any one of A1-A17, wherein the computer-executable instructions are executable by the processor system to at least: cause the artificial intelligence system to convert a first functional block, which is included in the functional blocks of the legacy application, into a first code block, which is included in the code blocks of the converted application, by converting a first number of rows of information in the first functional block into a second number of rows of code in the first code block, wherein the first number of rows and the second number of rows are different.
(A19) In the example system of any one of A1-A18, wherein the computer-executable instructions are executable by the processor system to at least: cause the artificial intelligence system to perform the conversion of the legacy application into the converted application using at least one of a development framework or a code conversion framework.
(B1) An example method is implemented by a computing system (Figure 1, 102A-102M, 106A-106N; Figure 5, 500; Figure 6, 602; Figure 7, 700). The method comprises triggering (Figure 2, 202) an artificial intelligence system (Figure 5, 526) to generate a schema (Figure 5, 534), which defines functional blocks of a legacy application (Figure 5, 540) and logical relationships between the functional blocks, by providing the legacy application and documentation (Figure 5, 532), which describes the functional blocks and the logical relationships, as first inputs to the artificial intelligence system. The method further comprises triggering (Figure 2, 204) the artificial intelligence system to perform a conversion of the legacy application into a converted application (Figure 5, 536) by providing the schema and the legacy application as second inputs to the artificial intelligence system. The conversion comprises: causing (Figure 2, 206) the artificial intelligence system to convert the functional blocks, which are configured to have respective functionalities and which are written in a first computer programming language, into code blocks, which are configured to have the respective functionalities and which are written in a second computer programming language that is different from the first computer language, by using the schema to identify the functional blocks; and causing (Figure 2, 208) the artificial intelligence system to configure the code blocks to have the logical relationships by using the schema to identify the logical relationships, wherein the converted application is defined by the code blocks and the logical relationships.
(B2) In the example method of B1, further comprising: triggering the artificial intelligence system to generate the documentation, which describes the functional blocks and the logical relationships between the functional blocks, by providing the legacy application and a description of the legacy application as third inputs to the artificial intelligence system; wherein triggering the artificial intelligence system to generate the schema comprises: triggering the artificial intelligence system to generate the schema as a result of triggering the artificial intelligence system to generate the documentation.
(B3) In the example method of any one of B1-B2, wherein triggering the artificial intelligence system to generate the documentation comprises: causing the artificial intelligence system to identify the functional blocks of the legacy application by clustering respective subsets of a plurality of files that define the legacy application into the functional blocks as a result of the respective subsets of the plurality of files being configured to have the respective functionalities.
(B4) In the example method of any one of B1-B3, wherein the method further comprises: triggering the artificial intelligence system to generate a functional test, which is configured to evaluate an extent to which the code blocks of the converted application have the respective functionalities by providing the documentation, which describes the respective functionalities, and the schema as fourth inputs to the artificial intelligence system.
(B5) In the example method of any one of B1-B4, further comprising: causing a first functional test to be performed on the legacy application, the first functional test indicating a first extent to which a first functionality of the legacy application conforms to the functionalities defined by the schema; causing a second functional test to be performed on the converted application, the second functional test indicating a second extent to which a second functionality of the converted application conforms to the functionalities defined by the schema; and triggering the artificial intelligence system to evaluate an extent to which a first value corresponds to a second value, wherein the first value indicates the first extent to which the first functionality of the legacy application conforms to the respective functionalities defined by the schema, wherein the second value indicates the second extent to which the second functionality of the converted application conforms to the respective functionalities defined by the schema.
(B6) In the example method of any one of B1-B5, further comprising: as a result of the extent to which the first value corresponds to the second value being less than or equal to a threshold extent, causing the artificial intelligence system to modify at least a subset of the code blocks to include a change that increases the extent to which the first value corresponds to the second value.
(B7) In the example method of any one of B1-B6, further comprising: triggering the artificial intelligence system to generate an integration test, which is configured to evaluate an extent to which interactions between the code blocks of the converted application correspond to the logical relationships defined by the schema by providing the documentation and the schema as fourth inputs to the artificial intelligence system.
(B8) In the example method of any one of B1-B7, further comprising: causing a first integration test to be performed on the legacy application, the first integration test indicating a first extent to which first interactions between the functional blocks of the legacy application correspond to the logical relationships defined by the schema; causing a second integration test to be performed on the converted application, the second integration test indicating a second extent to which second interactions between the code blocks of the converted application correspond to the logical relationships defined by the schema; and triggering the artificial intelligence system to evaluate an extent to which a first value corresponds to a second value, wherein the first value indicates the first extent to which the first interactions between the functional blocks of the legacy application correspond to the logical relationships defined by the schema, wherein the second value indicates the second extent to which the second interactions between the code blocks of the converted application correspond to the logical relationships defined by the schema.
(B9) In the example method of any one of B1-B8, further comprising: as a result of the extent to which the first value corresponds to the second value being less than or equal to a threshold extent, causing the artificial intelligence system to modify at least a subset of the code blocks to include a change that increases the extent to which the first value corresponds to the second value.
(B10) In the example method of any one of B1-B9, further comprising: causing the artificial intelligence system to iteratively perform a modification operation, which comprises increasing an extent to which a first functionality of the legacy application corresponds to a second functionality of the converted application by alternately modifying the schema using the code blocks and modifying the code blocks using the schema.
(B11) In the example method of any one of B1-B10, wherein the functional blocks of the legacy application include a first functional block and a second functional block, the first functional block having an identified dependency on the second functional block; wherein causing the artificial intelligence system to convert the functional blocks into the code blocks comprises: causing the artificial intelligence system to convert the first and second functional blocks of the legacy application into first and second code blocks; and wherein causing the artificial intelligence system to configure the code blocks to have the logical relationships defined by the schema comprises: causing the artificial intelligence system to configure the first code block to have a specified dependency on the second code block as a result of the schema defining the identified dependency of the first functional block on the second functional block.
(B12) In the example method of any one of B1-B11, wherein triggering the artificial intelligence system to generate the schema comprises: triggering the artificial intelligence system to replace an initial schema associated with the legacy application with the schema that defines the functional blocks and the logical relationships between the functional blocks.
(B13) In the example method of any one of B1-B12, wherein the documentation further describes a first functional element in a first functional block, which is included in the functional blocks, and a variable that is referenced by the first functional block.
(B14) In the example method of any one of B1-B13, wherein triggering the artificial intelligence system to generate the schema comprises: causing the artificial intelligence system to limit respective sizes of the functional blocks of the legacy application to be less than or equal to a token limit of the artificial intelligence system.
(B15) In the example method of any one of B1-B14, wherein triggering the artificial intelligence system to generate the schema comprises: triggering the artificial intelligence system to cause the schema to rename items in the legacy application.
(B16) In the example method of any one of B1-B15, wherein triggering the artificial intelligence system to perform the conversion of the legacy application into the converted application comprises: at a first time instance, training the artificial intelligence system on the schema; and at a second time instance that follows the first time instance, causing the artificial intelligence system to convert the functional blocks into the code blocks as a result of the artificial intelligence system being trained on the schema by providing the legacy application to the artificial intelligence system.
(B17) In the example method of any one of B1-B16, wherein triggering the artificial intelligence system to perform the conversion of the legacy application into the converted application comprises: causing the artificial intelligence system to convert a first functional block, which is included in the functional blocks of the legacy application, to a first code block, which is included in the code blocks of the converted application, by converting a first functional element having a first data type in the first functional block into a first code element having a second data type, which is different from the first data type, in the first code block as a result of the schema indicating the second data type.
(B18) In the example method of any one of B1-B17, wherein triggering the artificial intelligence system to perform the conversion of the legacy application into the converted application comprises: triggering the artificial intelligence system to convert a first functional block, which is included in the functional blocks of the legacy application, into a first code block, which is included in the code blocks of the converted application, by converting a first number of rows of information in the first functional block into a second number of rows of code in the first code block, wherein the first number of rows and the second number of rows are different.
(B19) In the example method of any one of B1-B18, wherein triggering the artificial intelligence system to perform the conversion of the legacy application into the converted application comprises: triggering the artificial intelligence system to perform the conversion of the legacy application into the converted application using at least one of a development framework or a code conversion framework.
(C1) An example computer program product (Figure 6, 624; Figure 7, 718, 722) comprises a computer-readable storage medium having instructions recorded thereon for enabling a processor-based system (Figure 1, 12A-102M, 106A-106N; Figure 5, 500; Figure 6, 602; Figure 7, 700) to perform operations. The operations comprise causing an artificial intelligence system (Figure 5, 526) to generate documentation (Figure 5, 532), which describes functional blocks of a legacy application (Figure 5, 50) and logical relationships between the functional blocks, by providing the legacy application and a description (Figure 5, 542) of the legacy application as first inputs to the artificial intelligence system. The operations further comprise causing (Figure 2, 202) the artificial intelligence system to generate a schema (Figure 5, 534), which defines the functional blocks and the logical relationships between the functional blocks, by providing the legacy application and the documentation, which describes the functional blocks and the logical relationships, as second inputs to the artificial intelligence system. The operations further comprise causing (Figure 2, 204) the artificial intelligence system to perform a conversion of the legacy application into a converted application (Figure 5, 536) by providing the schema and the legacy application as third inputs to the artificial intelligence system. Performing the conversion comprises: converting the functional blocks, which are configured to have respective functionalities and which are written in a first programming language, into code blocks, which are configured to have the respective functionalities and which are written in a second programming language that is different from the first programming language, by using the schema; and configuring the code blocks to have the logical relationships by using the schema. The converted application is defined by the code blocks and the logical relationships.
(D1) An AI system is caused to generate a schema that defines functional blocks of a legacy application and logical relationships therebetween based on documentation describing the functional blocks and the logical relationships. The AI system is caused to perform a conversion of the legacy application into a converted application based on the schema and the legacy application. Performing the conversion includes converting the functional blocks, which are configured to have respective functionalities and are written in a first programming language, into code blocks, which are configured to have the respective functionalities and are written in a second programming language. Performing the conversion further includes configuring the code blocks to have the logical relationships. The converted application is defined by the code blocks and the logical relationships.

### III. Example Computer System

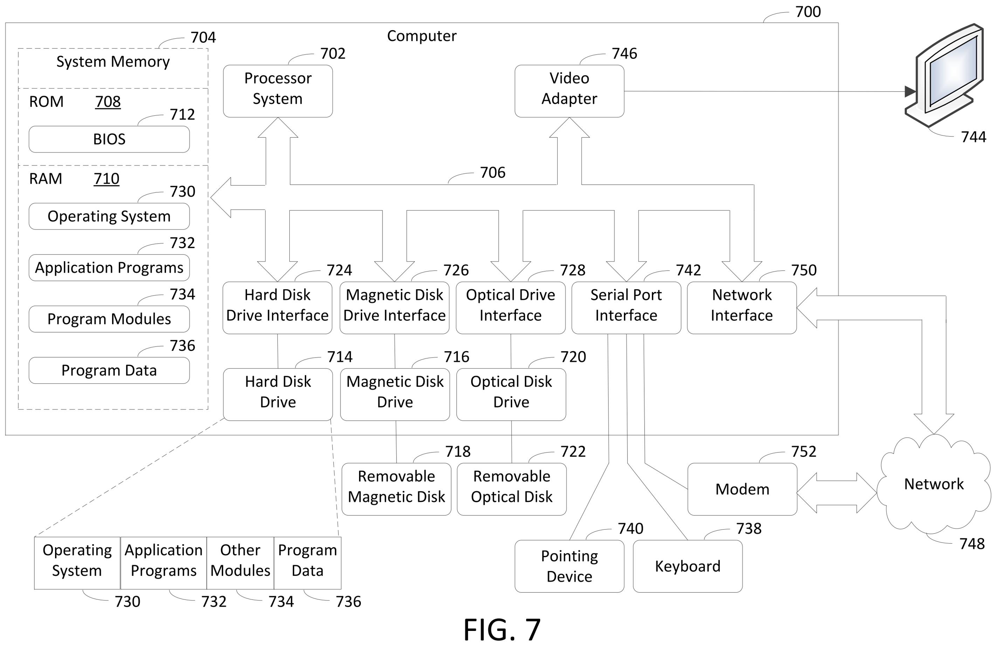

FIG. 7 depicts an example computer 700 in which embodiments may be implemented. Any one or more of the user devices 102A-102M and/or any one or more of the servers 106A-106N shown in FIG. 1 and/or the computing system 500 shown in FIG. 5 may be implemented using computer 700, including one or more features of computer 700 and/or alternative features. Computer 700 may be a general-purpose computing device in the form of a conventional personal computer, a mobile computer, or a workstation, for example, or computer 700 may be a special purpose computing device. The description of computer 700 provided herein is provided for purposes of illustration, and is not intended to be limiting. Embodiments may be implemented in further types of computer systems, as would be known to persons skilled in the relevant art(s).

As shown in FIG. 7, computer 700 includes a processor system 702, a system memory 704, and a bus 706 that couples various system components including system memory 704 to processor system 702. Bus 706 represents one or more of any of several types of bus structures, including a memory bus or memory controller, a peripheral bus, an accelerated graphics port, and a processor or local bus using any of a variety of bus architectures. System memory 704 includes read only memory (ROM) 708 and random access memory (RAM) 710. A basic input/output system 712 (BIOS) is stored in ROM 708.

Computer 700 also has one or more of the following drives: a hard disk drive 714 for reading from and writing to a hard disk, a magnetic disk drive 716 for reading from or writing to a removable magnetic disk 718, and an optical disk drive 720 for reading from or writing to a removable optical disk 722 such as a CD ROM, DVD ROM, or other optical media. Hard disk drive 714, magnetic disk drive 716, and optical disk drive 720 are connected to bus 706 by a hard disk drive interface 724, a magnetic disk drive interface 726, and an optical drive interface 728, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 730, one or more application programs 732, other program modules 734, and program data 736. Application programs 732 or program modules 734 may include, for example, computer program logic for implementing any one or more of (e.g., at least a portion of) the AI-based schema-dependent conversion logic 108, the AI-based schema-dependent conversion logic 508, the document generation logic 512, the schema generation logic 514, the application conversion logic 516, the first testing logic 518, the second testing logic 520, the test evaluation logic 522, the modification logic 524, the AI system 526, flowchart 200 (including any step of flowchart 200), flowchart 300 (including any step of flowchart 300), and/or flowchart 400 (including any step of flowchart 400), as described herein.

A user may enter commands and information into the computer 700 through input devices such as keyboard 738 and pointing device 740. Other input devices (not shown) may include a microphone, joystick, game pad, satellite dish, scanner, touch screen, camera, accelerometer, gyroscope, or the like. These and other input devices are often connected to the processor system 702 through a serial port interface 742 that is coupled to bus 706, but may be connected by other interfaces, such as a parallel port, game port, or a universal serial bus (USB).

A display device 744 (e.g., a monitor) is also connected to bus 706 via an interface, such as a video adapter 746. In addition to display device 744, computer 700 may include other peripheral output devices (not shown) such as speakers and printers.

Computer 700 is connected to a network 748 (e.g., the Internet) through a network interface 750 (e.g., a network or adapter), a modem 752, or other means for establishing communications over the network. Modem 752, which may be internal or external, is connected to bus 706 via serial port interface 742.

As used herein, the terms "computer program medium" and "computer-readable storage medium" are used to generally refer to media (e.g., non-transitory media) such as the hard disk associated with hard disk drive 714, removable magnetic disk 718, removable optical disk 722, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and non-overlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 732 and other program modules 734) may be stored on the hard disk, magnetic disk, optical disk, ROM, or RAM. Such computer programs may also be received via network interface 750 or serial port interface 742. Such computer programs, when executed or loaded by an application, enable computer 700 to implement features of embodiments discussed herein. Accordingly, such computer programs represent controllers of the computer 700.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A system (102A-102M, 106A-106N, 500, 602, 700) comprising:
a processor system (610, 702); and
a memory (620, 622, 624, 704, 708, 710) that stores computer-executable instructions that are executable by the processor system (610, 702) to at least:
cause (202) an artificial intelligence system (526) to generate a schema (534), which defines functional blocks of a legacy application (540) and logical relationships between the functional blocks, by providing the legacy application (540) and documentation (532), which describes the functional blocks and the logical relationships, as first inputs to the artificial intelligence system (526); and
cause (204) the artificial intelligence system (526) to perform a conversion of the legacy application (540) into a converted application (536) by providing the schema (534) and the legacy application (540) as second inputs to the artificial intelligence system (526), the conversion comprising:
convert the functional blocks, which are configured to have respective functionalities and which are written in a first programming language, into code blocks, which are configured to have the respective functionalities and which are written in a second programming language that is different from the first programming language, by using the schema (534) to identify the functional blocks; and
configure the code blocks to have the logical relationships by using the schema (534) to identify the logical relationships, wherein the converted application (536) is defined by the code blocks and the logical relationships.

2. The system according to claim 1, wherein the computer-executable instructions are executable by the processor system to at least:
cause the artificial intelligence system to generate the documentation by providing the legacy application and a description of the legacy application as third inputs to the artificial intelligence system; and
cause the artificial intelligence system to generate the schema as a result of the documentation being generated.

3. The system according to any one of claims 1 to 2, wherein the computer-executable instructions are executable by the processor system to at least:
cause the artificial intelligence system to identify the functional blocks of the legacy application by clustering respective subsets of a plurality of files that define the legacy application into the functional blocks as a result of the respective subsets of the plurality of files being configured to have the respective functionalities.

4. The system according to any one of claims 1 to 3, wherein the computer-executable instructions are executable by the processor system further to at least:
cause the artificial intelligence system to generate a functional test, which is configured to evaluate an extent to which the code blocks of the converted application have the respective functionalities.

5. The system according to any one of claims 1 to 4, wherein the computer-executable instructions are executable by the processor system further to at least:
cause the artificial intelligence system to generate an integration test, which is configured to evaluate an extent to which interactions between the code blocks of the converted application correspond to the logical relationships defined by the schema, by providing the documentation and the schema as third inputs to the artificial intelligence system.

6. The system according to any one of claims 1 to 5, wherein the functional blocks of the legacy application include a first functional block and a second functional block, the first functional block having an identified dependency on the second functional block; and
wherein the computer-executable instructions are executable by the processor system to at least:
cause the artificial intelligence system to convert the first and second functional blocks of the legacy application into first and second code blocks; and
cause the artificial intelligence system to configure the first code block to have a specified dependency on the second code block as a result of the schema defining the identified dependency of the first functional block on the second functional block.

7. The system according to any one of claims 1 to 6, wherein the documentation further describes a first functional element in a first functional block, which is included in the functional blocks, and a variable that is referenced by the first functional block.

8. The system according to any one of claims 1 to 7, wherein the computer-executable instructions are executable by the processor system to at least:
cause the artificial intelligence system to convert a first functional block, which is included in the functional blocks of the legacy application, to a first code block, which is included in the code blocks of the converted application, by converting a first functional element having a first data type in the first functional block into a first code element having a second data type, which is different from the first data type, in the first code block as a result of the schema indicating the second data type.

9. The system according to any one of claims 1 to 8, wherein the computer-executable instructions are executable by the processor system to at least:
cause the artificial intelligence system to convert a first functional block, which is included in the functional blocks of the legacy application, into a first code block, which is included in the code blocks of the converted application, by converting a first number of rows of information in the first functional block into a second number of rows of code in the first code block, wherein the first number of rows and the second number of rows are different.

10. The system according to any one of claims 1 to 9, wherein the computer-executable instructions are executable by the processor system to at least:
cause the artificial intelligence system to perform the conversion of the legacy application into the converted application using at least one of a development framework or a code conversion framework.

11. A method implemented by a computing system (102A-102M, 106A-106N, 500, 602, 700), the method comprising:
triggering (202) an artificial intelligence system (526) to generate a schema (534), which defines functional blocks of a legacy application (540) and logical relationships between the functional blocks, by providing the legacy application (540) and documentation (532), which describes the functional blocks and the logical relationships, as first inputs to the artificial intelligence system (526); and
triggering (204) the artificial intelligence system (526) to perform a conversion of the legacy application (540) into a converted application (536) by providing the schema (534) and the legacy application (540) as second inputs to the artificial intelligence system (526), the conversion comprising:
converting the functional blocks, which are configured to have respective functionalities and which are written in a first computer programming language, into code blocks, which are configured to have the respective functionalities and which are written in a second computer programming language that is different from the first computer language, by using the schema (534) to identify the functional blocks; and
configuring the code blocks to have the logical relationships by using the schema (534) to identify the logical relationships, wherein the converted application (536) is defined by the code blocks and the logical relationships.

12. The method according to claim 11, further comprising:
causing a first functional test to be performed on the legacy application, the first functional test indicating a first extent to which a first functionality of the legacy application conforms to the functionalities defined by the schema;
causing a second functional test to be performed on the converted application, the second functional test indicating a second extent to which a second functionality of the converted application conforms to the functionalities defined by the schema; and
triggering the artificial intelligence system to evaluate an extent to which a first value corresponds to a second value, wherein the first value indicates the first extent to which the first functionality of the legacy application conforms to the respective functionalities defined by the schema, wherein the second value indicates the second extent to which the second functionality of the converted application conforms to the respective functionalities defined by the schema.

13. The method according to any one of claims 11 to 12, further comprising:
as a result of the extent to which the first value corresponds to the second value being less than or equal to a threshold extent, causing the artificial intelligence system to modify at least a subset of the code blocks to include a change that increases the extent to which the first value corresponds to the second value.

14. The method according to any one of claims 11 to 13, further comprising:
causing a first integration test to be performed on the legacy application, the first integration test indicating a first extent to which first interactions between the functional blocks of the legacy application correspond to the logical relationships defined by the schema;
causing a second integration test to be performed on the converted application, the second integration test indicating a second extent to which second interactions between the code blocks of the converted application correspond to the logical relationships defined by the schema; and
triggering the artificial intelligence system to evaluate an extent to which a first value corresponds to a second value, wherein the first value indicates the first extent to which the first interactions between the functional blocks of the legacy application correspond to the logical relationships defined by the schema, wherein the second value indicates the second extent to which the second interactions between the code blocks of the converted application correspond to the logical relationships defined by the schema.

15. The method according to any one of claims 11 to 14, further comprising:
as a result of the extent to which the first value corresponds to the second value being less than or equal to a threshold extent, causing the artificial intelligence system to modify at least a subset of the code blocks to include a change that increases the extent to which the first value corresponds to the second value.
